# EUROPEAN PATENT APPLICATION

(11) **EP 2 120 378 A1**
(43) Date of publication of application: **18.11.2009**
(21) Application number: 08704142.2
(22) Date of filing: 30.01.2008
(51) Int. Cl.: H04J 11/00, H04J 1/00, H04Q 7/36

(54) **COMMUNICATION TERMINAL DEVICE, COMMUNICATION CONTROL DEVICE, RADIO COMMUNICATION SYSTEM, AND RESOURCE ALLOCATION REQUEST METHOD**

(30) Priority: 07.02.2007 JP 2007028383
(71) Applicant: Sharp Kabushiki Kaisha, Osaka-shi, Osaka 545-8522 (JP)
(72) Inventor: SUGAWARA, Yasuo, Osaka-shi Osaka 545-8522 (JP); YAMADA, Shohei, Osaka-shi Osaka 545-8522 (JP); NAKASHIMA, Daiichiro, Osaka-shi Osaka 545-8522 (JP); KATO, Yasuyuki, Osaka-shi Osaka 545-8522 (JP); UEMURA, Katsunari, Osaka-shi Osaka 545-8522 (JP); OH, Waho, Osaka-shi Osaka 545-8522 (JP); IMAMURA, Kimihiko, Osaka-shi Osaka 545-8522 (JP)
(74) Representative: Müller - Hoffmann & Partner
(86) International application number: PCT/JP2008/051360
(87) International publication number: WO 2008/096647

(57) **Abstract**

A communication terminal apparatus requests resource allocation to a communication control apparatus without allocating any dedicated resource for resource request. The communication terminal apparatus is applied to a wireless communication system in which the communication control apparatus allocates resources used when a communication terminal apparatus 200 performs wireless transmission to a communication control apparatus 100. The communication terminal apparatus includes: a determination unit 210 determining whether to make resource request to the communication control apparatus 100; and a signal control unit 211 which transmits a signal used to maintain time-frequency synchronization with the communication control apparatus 100 to the communication control apparatus 100 according to a first transmission procedure for maintaining the synchronization, while transmitting the signal to the communication control apparatus 100 according to a second transmission procedure indicating resource request when the determination unit 210 has determined to make resource request.

## Description

### Technical Field

The present invention relates to a communication terminal apparatus, a communication control apparatus, a wireless communication system, and a resource allocation request method which are applied to a wireless communication system in which the communication control apparatus allocates resources used when the communication terminal apparatus performs wireless transmission to the communication control apparatus.

### Background Art

In 3GPP (3rd Generation Partnership Project), W-CDMA (Wideband-Code Division Multiple Access) has been standardized as an RAT (Radio Access Technology) of a 3rd generation cellular mobile communication system and has come into service in order (Non-Patent Document 1). Furthermore, the evolution of a 3rd generation RAT (Evolved Universal Terrestrial Radio Access (EUTRA)) and the evolution of a 3rd generation RAT access network (Evolved Universal Terrestrial Radio Access Network (EUTRAN)) are investigated (Non-Patent Document 2).

In EUTRA, three states which are a detached state, an idle state, and an active state are now considered as states of a mobile station (user equipment (UE)). The detached state is a state where a base station (node B (NB)) does not recognize the existence of a mobile station because the mobile station is just after power-on, just after transition to a different RAT, or the like. The idle state is a state where a base station recognizes the existence of a mobile station, data communication is not performed, the base station has allocated minimum downlink resources for an incoming call to the mobile station, and the mobile station is performing discontinuous reception using the allocated resources. The active state is a state where a base station recognizes the existence of a mobile station and data communication is being performed between the base station and the mobile station.

The active state includes a communication mode (TX/RX mode), an discontinuous transmission/reception mode (DTX/DRX mode), etc. The communication mode (TX/RX mode) is a state where a mobile station is always communicating with a base station. The DTX/DRX mode is, for example, a state where data is not always transmitted and received as performing web browse, but communication is performed at irregular intervals or regular intervals.

When communication is performed between a mobile station and a base station, uplink (UL) time-frequency synchronization and downlink (DL) time-frequency synchronization are needed. Conversely, when the mobile station is not in synchronization with the base station, a control signal is exchanged between the mobile station and the base station, and the mobile station will make a transmission after synchronizing with the base station. Especially, in order to maintain the synchronization in uplink transmission from the mobile station to the base station, the mobile station needs to keep transmitting a control signal, a pilot signal, or data to the base station in a period when the synchronization can be maintained (e.g. every 500 msec at most). Synchronization between the mobile station and the base station is achieved in such a way that the mobile station transmits data, a control signal, or a pilot signal and thereby the base station notifies the mobile station of a UL synchronization difference and corrects it at any time in a period when the synchronization can be maintained.

In a basic UL scheduling method, a base station does UL transmission path estimation (channel estimation) and then informs, as a consequence, a mobile station of the positions of time-frequency resources for UL data to be transmitted and a UL scheduling grant designated by the mobile station. Specifically, in order to enable the transmission of UL data from the mobile station to the base station, the base station does UL transmission path estimation (channel estimation) using a pilot signal for UL CQI (Channel Quality Indicator) measurement received from the mobile station and thereby performs scheduling of which time-frequency resources to be used. The result of the scheduling is transmitted being included in a resource allocation (UL Resource Allocation (UL RA)) notified from the base station to the mobile station. The result of the scheduling includes a UL scheduling grant and information which designates the positions of time-frequency resources used for UL data transmission.

When the mobile station requests more resources in addition to UL resources currently used (in such a case that data has arrived at a transmission buffer for UL or a new radio bearer is requested), the mobile station has conventionally made resource request by the following methods.
(1) A method by which a mobile station transmits a UL Scheduling Request (resource allocation request for transmitting UL data to a base station) to a base station using a Synchronized Random Access Channel (S-RACH) (see Non-Patent Document 3). This method is referred to as "first method" hereinafter.
(2) A method by which resources for control signal transmission have been allocated to each mobile station beforehand regardless of the amount of UL data and a UL Scheduling Request is transmitted using resources for control signal transmission when data has arrived at a transmission buffer for UL. This method is referred to as "second method" hereinafter.

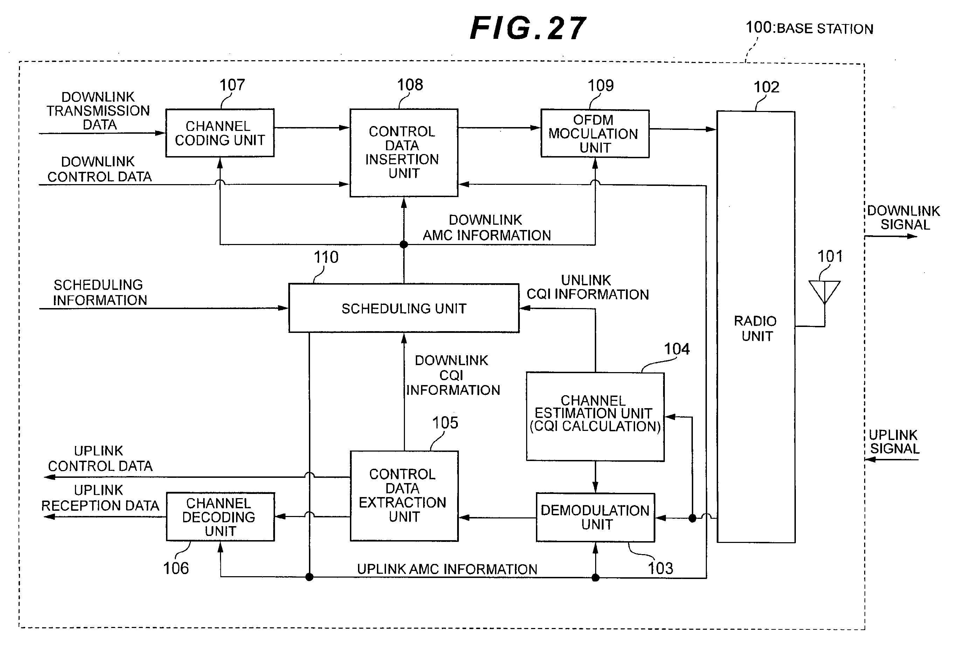

Fig. 27 is a block diagram showing a schematic configuration of a conventional base station. When a base station 100 has received packet data destined for a mobile station 200 from a higher-level network node (e.g. a SGSN (Serving GPRS Support Node), an RNC (Radio Network Control), or the like in a W-CDMA system, which are not shown in the figure), the base station 100 stores the packet data in a base station transmission data buffer (not shown).

Downlink transmission data from the transmission data buffer is input to a channel coding unit 107. Furthermore, downlink AMC information (including a downlink AMC mode, downlink mobile station allocation information (downlink scheduling information), etc.) which is an output signal of a scheduling unit 110 is input to the channel coding unit 107. The channel coding unit 107 performs the processing of coding the downlink transmission data using the downlink AMC mode (e.g. a turbo code whose coding rate is 2/3) defined by the downlink AMC information, and its output is input to a control data insertion unit 108.

Downlink control data includes control data of a downlink pilot channel DPCH, a downlink common control channel CCCH, and a downlink synchronization channel SNCH. The downlink control data is input to the control data insertion unit 108 where control data mapping of the downlink common control channel CCCH is performed.

On the other hand, the downlink AMC information (an AMC mode, downlink scheduling information, etc.) decided by the scheduling unit 110 is input to the control data insertion unit 108 where control data mapping of a downlink shared control signaling channel SCSCH is performed.

The output of the control data insertion unit 108 on which the downlink common control channel CCCH, the downlink shared control signaling channel SCSCH, and a downlink shared data channel SDCH have been mapped is sent to an OFDM modulation unit 109. The OFDM modulation unit 109 performs OFDM signal processing such as data modulation, serial-parallel conversion of an input signal, multiplication of a spread code and a scrambling code, IFFT (Inverse Discrete Fourier Transform), CP (Cyclic Prefix) insertion, and filtering, and generates an OFDM signal. Furthermore, the downlink AMC information from the scheduling unit 110 is input to the OFDM modulation unit 109, which controls data modulation (e.g. 16QAM) of each subcarrier. Then, the OFDM modulation unit 109 generates a radio frame, which is converted to an RF (radio frequency) band by the transmission circuit of a wireless unit 102, and a downlink signal is transmitted through an antenna 101.

On the other hand, an uplink signal transmitted from the mobile station 200 is received by the antenna 101, converted from an RF frequency to an IF or directly to a baseband by the receiving circuit of the wireless unit 102, and input to a demodulation unit 103.

An uplink channel estimation unit 104 estimates the propagation channel quality of individual uplink channel of each mobile station 200 using an uplink pilot channel UPCH for CQI measurement and calculates uplink propagation channel quality information CQI. The calculated uplink CQI information is input to the scheduling unit 110. Then, uplink AMC information (an uplink AMC mode, uplink scheduling information, etc.) which is an output of the scheduling unit 110 is input to the control data insertion unit 108, mapped on the downlink shared control signaling channel SCSCH, and transmitted to an appropriate mobile station 200. Furthermore, the uplink channel estimation unit 104 estimates a propagation channel of uplink data by using a pilot for data demodulation, and the demodulation unit 103 demodulates the data.

The appropriate mobile station 200 transmits packet data according to an uplink AMC mode and uplink scheduling information which have been decided according to the uplink AMC information which is an output of the scheduling unit 110. The uplink signal of the packet data is input to the demodulation unit 103 and a channel decoding unit 106. On the other hand, the uplink AMC information which is an output of the scheduling unit 110 is also input to the demodulation unit 103 and the channel decoding unit 106, and demodulation (e.g. QPSK) and decoding processing (e.g. a convolution code whose coding rate is 2/3) of the uplink signal are performed according to this information.

A control data extraction unit 105 extracts control information of an uplink contention base channel UCBCH and an uplink shared control signaling channel USCSCH. Furthermore, the control data extraction unit 105 extracts downlink channel propagation channel quality information CQI of the mobile station 200 transmitted through the uplink shared control signaling channel USCSCH and inputs it to the scheduling unit 110, which then generates downlink AMC information.

Uplink CQI information from the uplink channel estimation unit 104, downlink CQI information from the control data extraction unit 105, and downlink/uplink transmission data buffer information, uplink/downlink QoS (Quality of Service) information, various service class information, mobile station class information, mobile station identification information, etc. of each mobile station from a base station control unit (not shown) are input to the scheduling unit 110.

Then, the scheduling unit 110 generates uplink/downlink AMC information according to a selected scheduling algorithm, at a designated or calculated center frequency, using these input information, and achieves packet data transmission/reception scheduling.

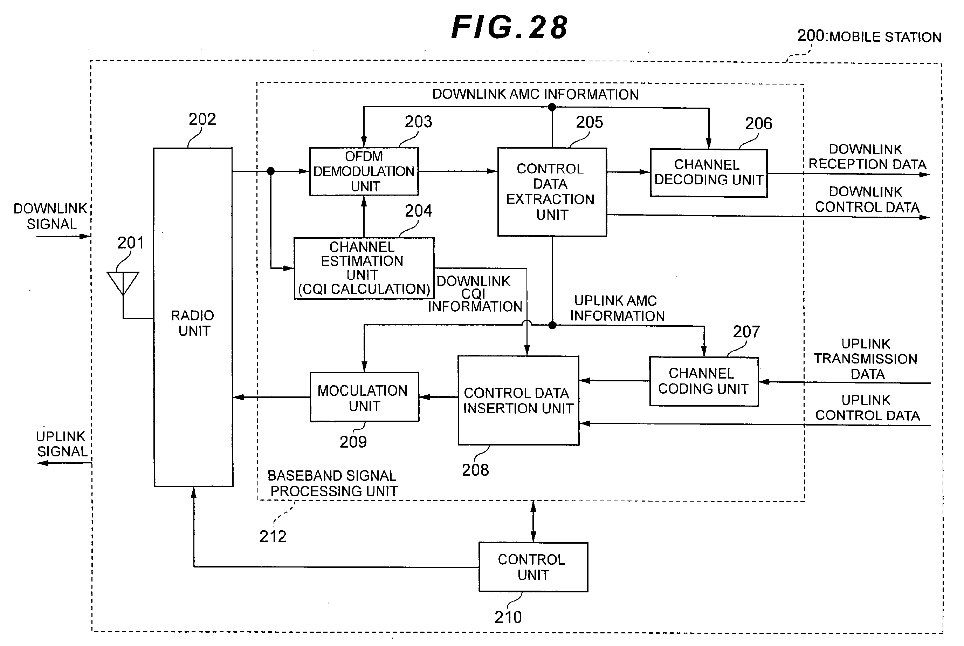

Fig. 28 is a block diagram showing a schematic configuration of a conventional mobile station. The mobile station 200 receives a downlink OFDM signal at an antenna 201 first, converts the downlink reception signal from an RF frequency to an IF or directly to a baseband by a local RF frequency oscillating circuit (synthesizer), a down-converter, a filter, an amplifier, etc. of a wireless unit 202, and inputs it to an OFDM demodulation unit 203. A downlink channel estimation unit 204 estimates the propagation channel quality of an individual downlink channel of each mobile station 200 using a downlink pilot channel DPCH (using a downlink common pilot channel DCPCH, a downlink individual pilot channel DDPCH, or the combination thereof) and calculates downlink propagation channel quality information CQI. The calculated downlink CQI information is input to a control data insertion unit 208, mapped on an uplink shared control signaling channel USCSCH, and transmitted to the base station 100. Furthermore, the channel estimation unit 204 of the mobile station periodically measures a downlink pilot channel DDPCH, calculates downlink propagation channel quality information CQI, and feeds it back to the base station through the control data insertion unit 208.

The OFDM demodulation unit 203 performs OFDM signal demodulation processing such as removal of CPs (Cyclic Prefixes) of an input signal, FET (Discrete Fourier Transform), multiplication of a spread code and a scrambling code, serial-parallel conversion, data demodulation, and filtering, generates demodulated data, and inputs it to a control data extraction unit 205.

The control data extraction unit 205 extracts downlink channel control information (downlink access information, broadcast information, etc.) other than a downlink shared data channel SDCH. Furthermore, the control data extraction unit 205 extracts downlink AMC information (a downlink AMC mode, downlink scheduling information, etc.) mapped on a downlink shared control signaling channel SCSCH, and outputs it to the OFDM demodulation unit 203 and a channel decoding unit 206. Furthermore, the control data extraction unit 205 extracts uplink AMC information (an uplink AMC mode, uplink scheduling information, etc.) mapped on the downlink shared control signaling channel SCSCH, and outputs it to a modulation unit 209 and a channel coding unit 207.

The OFDM demodulation unit 203 performs demodulation of subcarriers using an AMC mode (e.g. 16QAM) defined by the downlink AMC information. The channel decoding unit 206 performs decoding of packet data destined to the own station mapped on the downlink shared data channel SDCH, using an AMC mode (e.g. a turbo code whose coding rate is 2/3) defined by the downlink AMC information.

Uplink transmission data which is individual packet data of the mobile station 200 is input to the channel coding unit 207, which encodes the uplink transmission data using uplink AMC information (e.g. a convolution code whose coding rate is 2/3) which is output from the control data extraction unit 205, and outputs the encoded data to the control data insertion unit 208.

The control data insertion unit 208 maps downlink CQI information from the downlink channel estimation unit 204 onto an uplink shared control signaling channel USCSCH included in an uplink scheduling channel USCH, and maps an uplink contention base channel UCBCH and the uplink scheduling channel USCH onto an uplink transmission signal.

The modulation unit 209 performs data demodulation using uplink AMC information (e.g. QPSK) which is output from the control data extraction unit 205, and outputs the modulated data to the transmission circuit of the wireless unit 202. For the modulation of an uplink signal, an OFDM signal or an MC-CDMA signal may be used and a single carrier SC signal or a VSCRF-CDMA signal may be used to reduce PAPR.

A control unit 210 has mobile station class information, natural frequency bandwidth information, and mobile station identification information. The control unit 210 sends a control signal sifting to a designated or calculated center frequency to the wireless unit 202, which performs center frequency shifting using the local RF frequency oscillating circuit (synthesizer) of the wireless unit 202.

A baseband signal is converted to an RF frequency band signal by the local RF frequency oscillating circuit (synthesizer), up-converter, filter, amplifier, etc. of the wireless unit 202, and an uplink signal is transmitted through the antenna 201. The wireless unit 202 includes IF and RF filters corresponding to different frequency bands (e.g. 1.25 MHz, 2.5 MHz, 5 MHz, 10 MHz, 20 MHz, etc.). The various channels are described in Non-Patent Document 4.
Non-Patent Document 1: "W-CDMA Mobile Communication System" by Keiji Tachikawa, Maruzen Co. , Ltd, First Edition issued on 25th June, 2001
Non-Patent Document 2: 3GPP TR25.814, "Physical Layer Aspects for Evolved UTRA (Release 7)", v.7.0.0, [online], [Retrieved on 24th July, 2006], Internet < http://www.3gpp.org/ftp/Specs/archive/25_series/25.814/25814-1 22.zip>
Non-Patent Document 3: R2-061962, "Resource Request in Synchronized Case", 3GPP TSG-RAN WG2 LTE Ad-hoc, 27th-30th June, 2006
Non-Patent Document 4: R1-050707, "Physical Channels and Multiplexing in Evolved UTRA Downlink", 3GPP TSG RAN WG1 #42 on LTE London, UK

### Disclosure of the Invention

### Problems to be solved by the Invention

However, the first method needs to secure regions of special random access channels for synchronized mobile stations, and does not necessarily use resources effectively when the frequency of use of the random access channels is low. Furthermore, the first method uses random access which may collide with another mobile station, thus having a problem of taking much time for a procedure of requesting a new resource. Furthermore, the second method needs to always secure resources for transmitting a control signal for each mobile station, thus having a problem of being unable to use resources effectively when the frequency of use of the control signal is low. Thus, any of the methods has a problem of not using UL resources effectively.

The present invention has been developed in view of such circumstances and aims to provide a communication terminal apparatus, a communication control apparatus, a wireless communication system, and a resource allocation request method, wherein the communication terminal apparatus is able to request resource allocation to the communication control apparatus without allocating any dedicated resource for resource request.

### Means for solving the Problems

(1) In order to achieve the above object, the present invention takes the following steps. In other words, the communication terminal apparatus of the present invention is a communication terminal apparatus applied to a wireless communication system in which a communication control apparatus allocates resources used when the communication terminal apparatus performs wireless transmission to the communication control apparatus, the communication terminal apparatus having: a determination unit determining whether to make resource request to the communication control apparatus; and a signal control unit which transmits a signal used to maintain time-frequency synchronization with the communication control apparatus to the communication control apparatus according to a first transmission procedure for maintaining the synchronization, while transmitting the signal to the communication control apparatus according to a second transmission procedure indicating resource request when the determination unit has determined to make resource request.

Thus, the communication terminal apparatus is able to notify the communication control apparatus of resource request by changing the procedure of transmitting a signal used to maintain time-frequency synchronization with the communication control apparatus, so that no dedicated resource is needed for resource request and therefore resources can be used effectively.

(2) Furthermore, in the communication terminal apparatus of the present invention, the second transmission procedure is different from the first transmission procedure in transmission timing of the signal.

Thus, the communication terminal apparatus is able to notify the communication control apparatus of resource request by changing the timing of transmitting a signal used to maintain time-frequency synchronization with the communication control apparatus, so that no dedicated resource is needed for resource request and therefore resources can be used effectively.

(3) Furthermore, in the communication terminal apparatus of the present invention, the second transmission procedure is different from the first transmission procedure in part of frequency components of the signal.

Thus, the communication terminal apparatus is able to notify the communication control apparatus of resource request by changing part of the frequency components of a signal used to maintain time-frequency synchronization with the communication control apparatus, so that no dedicated resource is needed for resource request and therefore resources can be used effectively.

(4) Furthermore, in the communication terminal apparatus of the present invention, the second transmission procedure is different from the first transmission procedure in an orthogonal code used when the signal is multiplexed using an orthogonal code.

Thus, the communication terminal apparatus is able to notify the communication control apparatus of resource request by changing an orthogonal code used when a signal used to maintain time-frequency synchronization with the communication control apparatus is multiplexed using the orthogonal code, so that no dedicated resource is needed for resource request and therefore resources can be used effectively.

(5) Furthermore, in the communication terminal apparatus of the present invention, the second transmission procedure is different from the first transmission procedure in phases of the signal.

Thus, the communication terminal apparatus is able to notify the communication control apparatus of resource request by changing the phase of a signal used to maintain time-frequency synchronization with the communication control apparatus, so that no dedicated resource is needed for resource request and therefore resources can be used effectively.

(6) Furthermore, in the communication terminal apparatus of the present invention, the signal is a pilot signal.

Thus, the communication terminal apparatus is able to notify the communication control apparatus of resource request by changing the procedure of transmitting a pilot signal without using any dedicated resource allocated to make a source request, so that no dedicated resource is needed for resource request and therefore resources can be used effectively.

(7) Furthermore, the communication control apparatus of the present invention has: a detection unit detecting that the signal has been transmitted according to the second transmission procedure when receiving the signal from the communication terminal apparatus of any of claims 1 to 6; and a scheduling unit performing scheduling for allocating new resources to the communication terminal apparatus when the detection unit has detected that the signal has been transmitted according to the second transmission procedure.

Thus, the communication terminal apparatus is able to notify the communication control apparatus of resource request by changing the procedure of transmitting a signal used to maintain time-frequency synchronization with the communication control apparatus, so that no dedicated resource is needed for resource request and therefore resources can be used effectively.

(8) Furthermore, the wireless communication system of the present invention has: the communication terminal apparatus of any of claims 1 to 6; and the communication control apparatus of claim 7

Thus, the communication terminal apparatus is able to notify the communication control apparatus of resource request by changing the procedure of transmitting a signal used to maintain time-frequency synchronization with the communication control apparatus, so that no dedicated resource is needed for resource request and therefore resources can be used effectively.

(9) Furthermore, the resource allocation request method of the present invention is a resource allocation request method applied to a wireless communication system in which a communication control apparatus allocates resources used when a communication terminal apparatus performs wireless transmission to the communication control apparatus, wherein: the communication terminal apparatus transmits a signal used to maintain time-frequency synchronization between the communication terminal apparatus and the communication control apparatus to the communication control apparatus according to a first transmission procedure for maintaining the synchronization, while transmitting the signal to the communication control apparatus according to a second transmission procedure indicating resource request when requesting the resources; and the communication control apparatus detects that the signal has been transmitted according to the second transmission procedure when receiving the signal from the communication terminal apparatus, performs scheduling for allocating new resources to the communication terminal apparatus, and notifies the communication terminal apparatus of the result of the scheduling.

Thus, the communication terminal apparatus is able to notify the communication control apparatus of resource request by changing the procedure of transmitting a signal used to maintain time-frequency synchronization with the communication control apparatus, so that no dedicated resource is needed for resource request and therefore resources can be used effectively.

### Effect of the Invention

According to the present invention, the communication terminal apparatus is able to notify the communication control apparatus of resource request by changing the procedure of transmitting a signal used to maintain time-frequency synchronization with the communication control apparatus, so that no dedicated resource is needed for resource request and therefore resources can be used effectively.

### Brief Description of the Drawings

Fig. 1 shows an example of a configuration of a subframe;
Fig. 2 shows an example of arrangement of transmission data in distributed transmission;
Fig. 3 shows an example of arrangement of transmission data in localized transmission;
Fig. 4 is a block diagram showing a schematic configuration of a base station;
Fig. 5 is a block diagram showing a schematic configuration of a mobile station;
Fig. 6 is a flow chart showing an example of the operation of resource request, the left of the figure shows an example of the operation of the mobile station, and the right of the figure shows an example of the operation of the base station;
Fig. 7 is a sequence diagram showing an example of a change of a pilot signal according to a UL resource request in the first embodiment;
Figs. 8A-8C show example of resource utilization in the case that part of time-frequency resources secured to transmit a pilot signal is not transmitted; Fig. 8A is an example where the resources are divided into two regions, Fig. 8B is an example where the resources are divided into four regions, and Fig. 8C is an example where the resources are divided into four regions different from Fig. 8B;
Fig. 9 is a sequence diagram showing an example of a change of a pilot signal according to a UL resource request in the second embodiment;

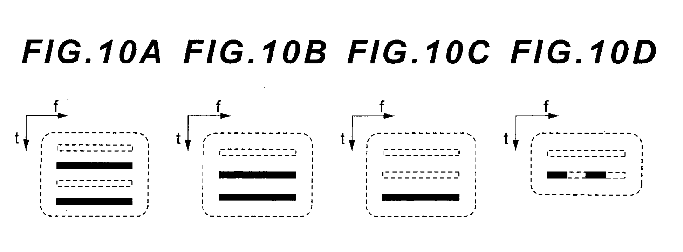

Fig. 10A-10D show example of resource utilization in the case that part of time-frequency resources secured to transmit a pilot signal is not transmitted: Fig. 10A is an example of using all bands as transmission bands in the order of not-transmitted / transmitted / not-transmitted / transmitted in the time direction, Fig. 10B is an example of using all bands as transmission bands in the order of not-transmitted / transmitted / transmitted in the time direction, Fig. 10C is an example of using all bands as transmission bands in the order of not-transmitted / not-transmitted / transmitted in the time direction, and Fig. 10D is an example of using all bands as transmission bands by dividing the region as in the order of not-transmitted / transmitted;
Fig. 11 is a sequence diagram showing an example of a change of a pilot signal according to a UL resource request in the third embodiment;
Fig. 12 is a sequence diagram showing an example of a change of a pilot signal according to a UL resource request in the fourth embodiment;
Fig. 13 is a sequence diagram showing an example of a change of a pilot signal according to a UL resource request in the fifth embodiment;
Fig. 14 shows an example of a state in the frequency direction of resources for transmitting a pilot signal of the fifth embodiment, the upper part shows a state at usual pilot signal transmission, and the lower part shows a state at UL resource request;
Fig. 15 is a sequence diagram showing an example of a change of a pilot signal according to a UL resource request in the sixth embodiment;
Fig. 16 shows an example of a state in the frequency direction of resources for transmitting a pilot signal of the sixth embodiment, the upper part shows a state at usual pilot signal transmission, and the lower part shows a state at UL resource request;
Fig. 17 is a sequence diagram showing an example of a change of a pilot signal according to a UL resource request in the seventh embodiment;
Fig. 18 shows an example of a state in the frequency direction of resources for transmitting a pilot signal of the seventh embodiment, the upper part shows a state at usual pilot signal transmission, and the lower part shows a state at resource request;
Fig. 19 is a sequence diagram showing an example of a change of a pilot signal according to a UL resource request in the eighth embodiment;
Fig. 20 shows an example of a state in the frequency direction of resources for transmitting a pilot signal of the eighth embodiment, the upper part shows a state at usual pilot signal transmission, and the lower part shows a state at resource request;
Fig. 21 is a sequence diagram showing an example of a change of a pilot signal according to a UL resource request in the ninth embodiment;
Fig. 22 shows phase components of a pilot signal in the ninth embodiment;
Fig. 23 shows phase components of a pilot signal in the ninth embodiment;
Fig. 24 shows phase components of a pilot signal in the ninth embodiment;
Fig. 25 shows phase components of a pilot signal in the ninth embodiment;
Fig. 26 shows phase components of a pilot signal in the ninth embodiment;
Fig. 27 is a block diagram showing a schematic configuration of a conventional base station; and
Fig. 28 is a block diagram showing a schematic configuration of a conventional mobile station.

### Description of Notations

100: Base station
101, 201: Antenna
102, 202: Radio unit
103: Demodulation unit
104, 204: Channel estimation unit
105, 205: Control data extraction unit
106, 206: Channel decoding unit
107, 207: Channel coding unit
108, 208: Control data insertion unit
109: OFDM modulation unit
110: Scheduling unit
111: Pilot signal detecting unit
200: Mobile station
203: OFDM demodulation unit
209: Modulation unit
210: Control unit
211: Pilot signal control unit
212: Baseband signal processing unit

### Best Modes for Carrying Out the Invention

Next, embodiments of the present invention will be described with reference to the drawings. In the drawings, the same notations are attached to components and equivalent portions having the same configurations or functions, and the description of the notations is omitted. Furthermore, when two or more identical components exist and are distinguished from each other, suffixes are added to notations to distinguish the components from each other. For example, a mobile station 200 or mobile stations 200 represent any one of two or more mobile stations 200a to 200c or two or more mobile stations 200a to 200c, and when notations with a suffix are used like a mobile station 200a (or a mobile station 200b), two or more mobile stations are distinguished from each other.

In the following description, a base station and mobile stations which constitute a wireless communication system are used. However, the present invention may be applied to a wireless communication system which is composed of a communication control apparatus which receives resource request allocating resources used for transmission of uplink data from communication terminal apparatuses, and the communication terminals which make resource request requesting allocation of resources to the communication control apparatus allocating the resources used for transmission of uplink data, and performs any of the information transmission procedures described in the following embodiments.

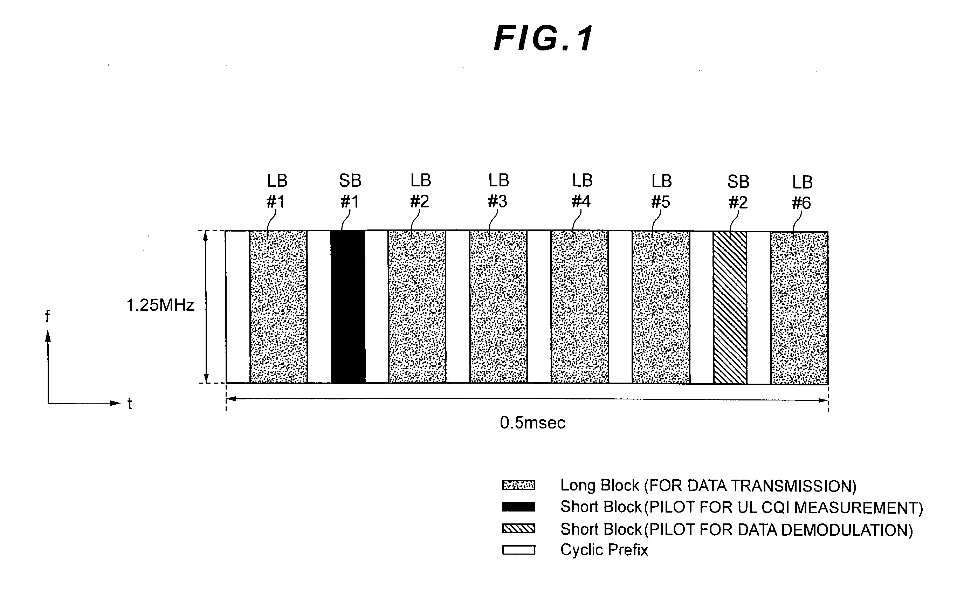

Fig. 1 shows an example of the configuration of a subframe. A subframe is obtained by dividing a radio frame with time concept. For example, Fig. 1 shows an example of a 0.5 msec subframe. A subframe is constituted by two or more resource units arranged in the frequency direction. The frequency bandwidth of the resource units is a band which is permitted to be used beforehand and supported by a base station, and is, for example, 1.25 MHz, 1.6 MHz, or the like. Fig. 1 shows an example of 1.25 MHz. The number of resource units in a subframe is dependent on a frequency bandwidth supported by the base station.

For example, when the frequency bandwidth of resources units is 1.25 MHz in a base station using a 10 MHz band, the number of resource units in a subframe is 8. A resource unit is composed of 6 long blocks (LBs), two short blocks (SBs), and cyclic prefixes (CPs) positioned between them and at the head. Furthermore, in Fig. 1, long blocks for data transmission are shaded, a short block of a pilot for UL CQI measurement is blackened, a short block of a pilot for data demodulation is diagonally shaded, and cyclic prefixes are white on black.

The LBs are used to transmit UL data. The SBs are used to transmit reference signals. Specifically, SB#1 is used to transmit a pilot signal for UL CQI measurement, and SB#2 is used to transmit a pilot signal for data demodulation. Furthermore, the CPs are called guard intervals, and are used to eliminate the influence of waveform distortion caused by a multipath (multipath fading) in radio propagation.

Resource request (UL Resource Request (UL RR)) is made when resources are requested in addition to UL resources currently used by a mobile station. For example, UL RR is made in such a case that data has arrived at a transmission buffer for UL, a new radio bearer is requested, a DTX/DRX cycle is changed, resources for a control signal are requested, a buffer status or a traffic transmission rate is changed, or UL resources are opened temporarily.

For example, VoIP (Voice over Internet Protocol) supports a mode called a silent mode in which data is not generated in such a case that a speaker has become silent according to a codec in a kind of traffic continuously generating regular data. In this case, in a silent period, effective use of resources becomes possible by allocating resources to other users. When returning from the silent mode, a mobile station needs to notify a base station of the retuning by any control message. In this case, resource request signal is needed. Furthermore, when the mobile station enters the silent mode and does not notify the base station of the entering by a control signal in a data region, the mobile station may include silent mode start request in the resource request signal.

Furthermore, when a mobile station adds a new different service such as video streaming or WEB browsing while receiving a service such as VoIP, the mobile station needs to request a new radio bearer. In this case also, resource request signal is needed. Furthermore, in low frequency sudden traffic such as WEB browsing, discontinuous transmission is performed in DTX mode, and resource request signal is needed when the sudden traffic is generated. Resources allocated by resource request by a pilot signal are resources for control signal transmission or resources for UL data transmission.

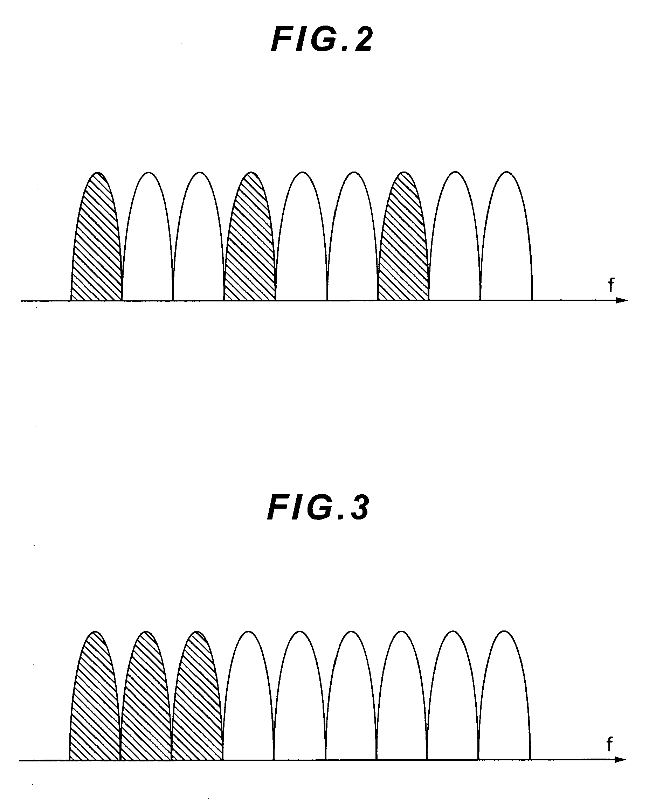

In the present invention, it is assumed that a mobile station uses an SC-FDMA (Single Carrier-Frequency Division Multiple Access) system as a multiplex system in the case that the mobile station performs UL transmission to a base station. In this multiplex system, two transmission methods which are a distributed transmission method and a localized transmission method as shown in Figs. 2 and 3 are used. Fig. 2 shows an example of arrangement of transmission data in a distributed transmission method, and Fig. 3 shows an example of arrangement of transmission data in a localized transmission method. The distributed transmission method is a method of transmitting subcarriers at regular intervals in the frequency direction. The localized transmission method is a method of transmitting subcarriers consecutive in the frequency direction. Since both of them are single carrier transmission methods, the mobile station is not able to perform distributed transmission and localized transmission at the same time.

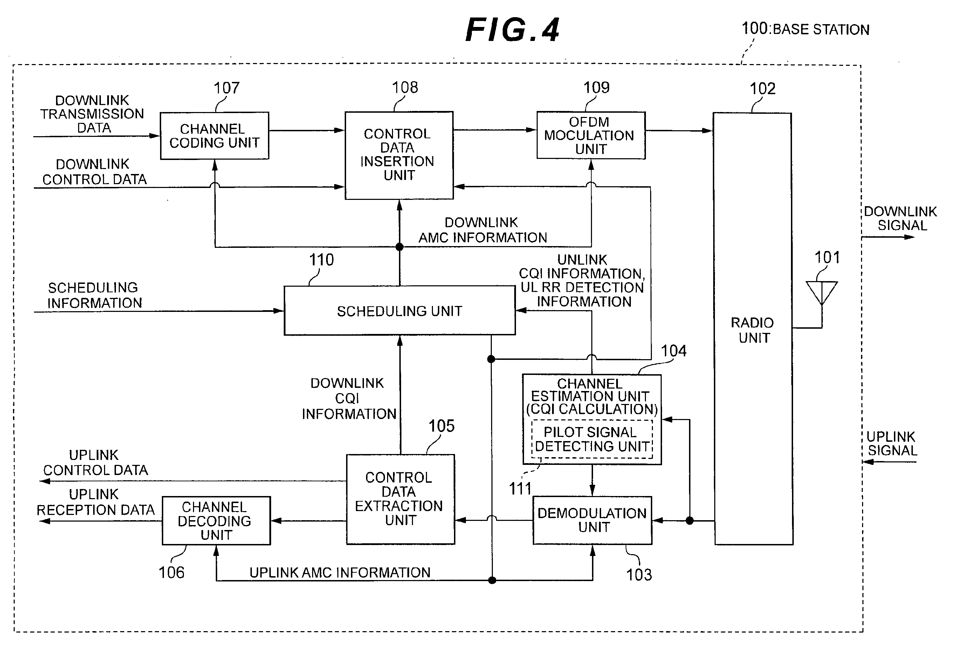

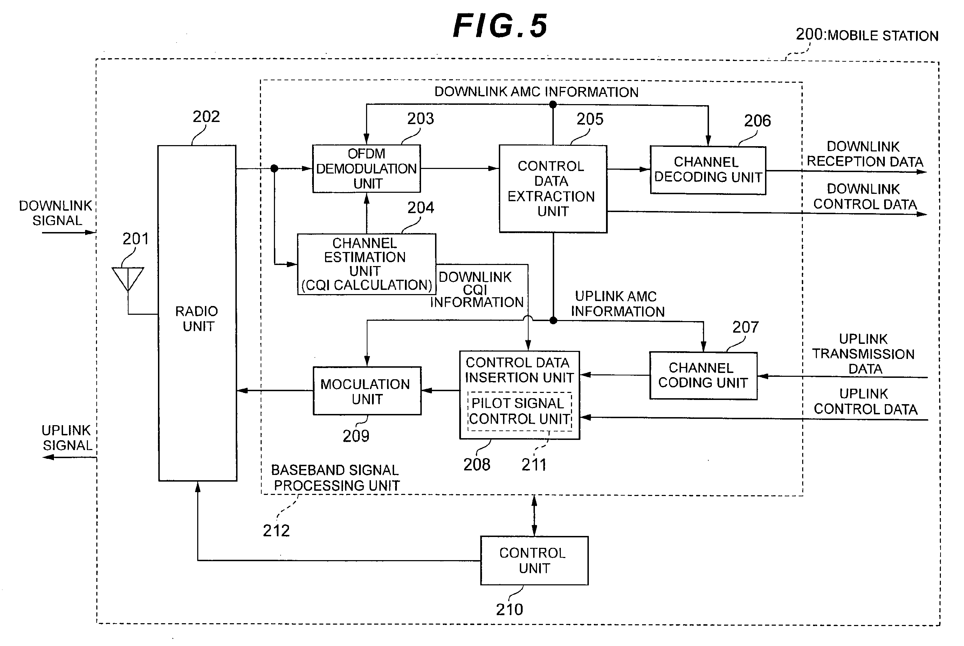

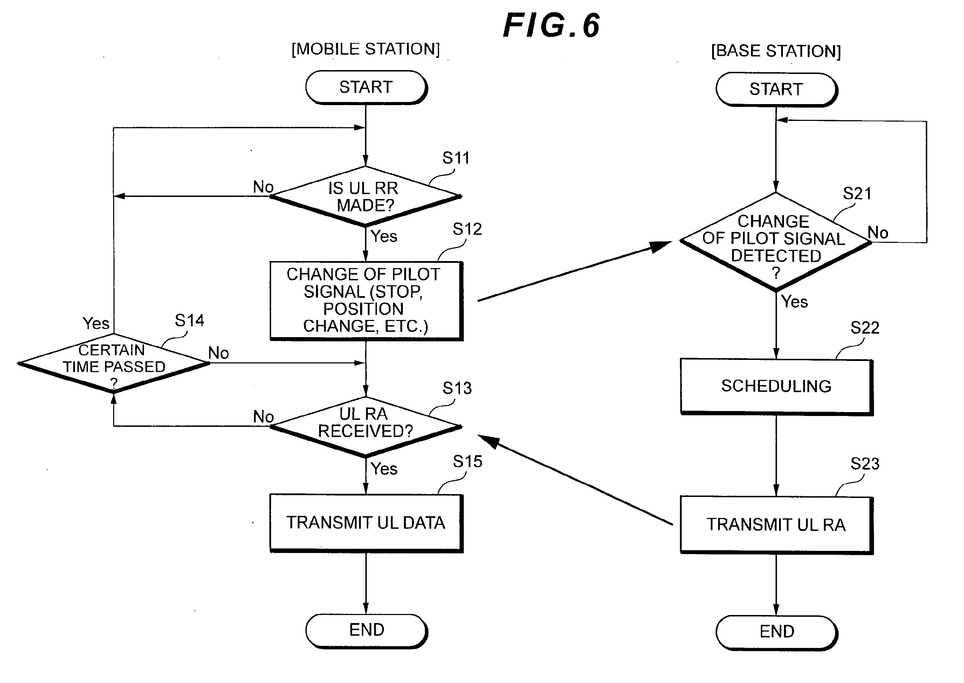

Fig. 4 is a block diagram showing a schematic configuration of a base station, and Fig. 5 is a block diagram showing a schematic configuration of a mobile station. As shown in Fig. 4, the base station of this embodiment is characterized with a pilot signal detecting unit 111 in an uplink channel estimation unit 104, and the mobile station of this embodiment is characterized with a pilot signal control unit 211 in a control data insertion unit 208. The processing procedure of the pilot signal detecting unit 111 may be described using a flow chart defined in Fig. 6 (right). The processing procedure of the pilot signal control unit 211 may be described using a flow chart defined in Fig. 6 (left).

First, the base station 100 will be described. The base station 100 shown in Fig. 4 has an antenna 101, a wireless unit 102, a demodulation unit 103, a channel estimation unit 104, a control data extraction unit 105, a channel decoding unit 106, a channel coding unit 107, a control data insertion unit 108, an OFDM modulation unit 109, a scheduling unit 110, and a pilot signal detecting unit 111. These components will be described according to the operation flow of the base station 100 according to Fig. 4.

First, when the base station 100 has received a packet data (downlink transmission data) destined to the mobile station 200 from the higher-level network node, the base station 100 stores the received packet data in a transmission data buffer (not shown) in the base station. The higher-level network node is, for example, an SGSN (Serving GPRS Support Node) or an RNC (Radio Network Control) in a W-CDMA system, and is not shown in Fig. 4. Downlink transmission data stored in the transmission data buffer is input to the channel coding unit 107. Furthermore, downlink AMC information which is an output signal of the scheduling unit 110 is input to the channel coding unit 107. The downlink AMC information includes a downlink AMC mode, downlink mobile station allocation information (downlink scheduling information), etc.

The channel coding unit 107 performs the processing of coding the downlink transmission data using the downlink AMC mode (e.g. a turbo code whose coding rate is 2/3) defined by the downlink AMC information, and outputs the encoded downlink transmission data to the control data insertion unit 108. Downlink control data includes control data of a downlink pilot channel DPCH, a downlink common control channel CCCH, and a downlink synchronization channel SNCH. The downlink control data is input to the control data insertion unit 108 where control data mapping of the downlink common control channel CCCH is performed.

On the other hand, the downlink AMC information (an AMC mode, downlink scheduling information, etc.) decided by the scheduling unit 110 is input to the control data insertion unit 108 where control data mapping of a downlink shared control signaling channel SCSCH is performed. The control data insertion unit 108 outputs downlink transmission data on which the downlink common control channel CCCH, the downlink shared control signaling channel SCSCH, and a downlink shared data channel SDCH have been mapped to the OFDM modulation unit 109. The OFDM modulation unit 109 performs OFDM signal processing such as data modulation, serial-parallel conversion of an input signal, multiplication of a spread code and a scrambling code, IFFT (Inverse Discrete Fourier Transform), CP (Cyclic Prefix) insertion, and filtering, to the downlink transmission data for which coding processing and control data mapping have been performed, and generates an OFDM signal. Furthermore, the downlink AMC information from the scheduling unit 110 is input to the OFDM modulation unit 109, which controls data modulation (e.g. 16QAM) of each subcarrier. Then, the OFDM modulation unit 109 generates a radio frame, which is converted to an RF (radio frequency) band by the transmission circuit of the wireless unit 102, and a downlink signal is transmitted through the antenna 101.

On the other hand, an uplink signal transmitted from the mobile station 200 is received by the antenna 101, converted from an RF frequency to an IF or directly to a baseband by the receiving circuit of the wireless unit 102, and input to the demodulation unit 103.

The channel estimation unit 104 estimates the propagation channel quality of individual uplink channel of each mobile station 200 using an uplink pilot channel UPCH for CQI measurement and calculates uplink propagation channel quality information (uplink CQI information). The calculated uplink CQI information is output to the scheduling unit 110. Furthermore, the channel estimation unit 104 estimates a propagation channel of uplink data and outputs the estimated propagation channel to the demodulation unit 103. The demodulation unit 103 demodulates data based on the input estimated propagation channel, and outputs demodulated data to the control data extraction unit 105. Furthermore, the channel estimation unit 104 has the pilot signal detecting unit 111. The pilot signal detecting unit 111 detects UL RR based on the uplink CQI information calculated by the channel estimation unit 104, and notifying the scheduling unit 110 of the UL RR. The details will be described later using Fig. 6.

Uplink AMC information (an uplink AMC mode, uplink scheduling information, etc.) generated by the scheduling unit 110 is input to the control data insertion unit 108, mapped on a downlink shared control signaling channel SCSCH, and transmitted to an appropriate mobile station 200. The uplink AMC information generated by the scheduling unit 110 is notified to the appropriate mobile station 200, which transmits packet data according to an uplink AMC mode and uplink scheduling information which have been decided according to the notified uplink AMC information. The uplink signal of the packet data transmitted by the mobile station is input to the demodulation unit 103 and the channel decoding unit 106. Furthermore, the uplink AMC information which is an output of the scheduling unit 110 is also input to the demodulation unit 103 and the channel decoding unit 106. The demodulation unit 103 and the channel decoding unit 106 perform demodulation (e.g. QPSK) and decoding processing (e.g. a convolution code whose coding rate is 2/3) of the uplink signal according to the AMC information input from the scheduling unit 110.

The control data extraction unit 105 extracts control information of an uplink contention base channel UCBCH and an uplink shared control signaling channel USCSCH from data which has been input from the demodulation unit 103. Furthermore, the control data extraction unit 105 extracts downlink propagation channel quality information (downlink CQI information) of the mobile station 200 transmitted through the uplink shared control signaling channel USCSCH and inputs it to the scheduling unit 110.

Uplink CQI information from the uplink channel estimation unit 104, downlink CQI information from the control data extraction unit 105, and downlink/uplink transmission data buffer information, uplink/downlink QoS (Quality of Service) information, various service class information, module station class information, mobile station identification information, etc. (these information is collectively referred to as "scheduling information" in Fig. 4) of each mobile station from a base station control unit (not shown) are input to the scheduling unit 110. The scheduling unit 110 generates uplink/downlink AMC information according to a selected scheduling algorithm, at a designated or calculated center frequency, using these input information, and achieves packet data transmission/reception scheduling.

Next, the mobile station 200 will be described. The mobile station 200 shown in Fig. 5 has an antenna 201, a wireless unit 202, an OFDM demodulation unit 203, a channel estimation unit 204, a control data extraction unit 205, a channel decoding unit 206, a channel coding unit 207, a control data insertion unit 208, a modulation unit 209, a control unit 210, and a pilot signal control unit 211. Furthermore, a baseband signal processing unit 212 includes the above components except the antenna 201 and the wireless unit 202. These components will be described according to the operation flow of the mobile station 200 according to Fig. 5.

The mobile station 200 receives a downlink OFDM signal (downlink signal) by the antenna 201 first, converts the downlink reception signal from an RF (radio frequency) to an IF or directly to a baseband by a local RF frequency oscillating circuit (synthesizer), a down-converter, a filter, an amplifier, etc. of the wireless unit 202, and inputs it to the OFDM demodulation unit 203.

The downlink channel estimation unit 204 estimates the propagation channel quality of an individual downlink channel of each mobile station 200 using a downlink pilot channel DPCH (using a downlink common pilot channel DCPCH, a downlink individual pilot channel DDPCH, or the combination thereof) and calculates downlink propagation channel quality information (downlink CQI information). The calculated downlink CQI information is input to the control data insertion unit 208, mapped on an uplink shared control signaling channel USCSCH, and transmitted to the base station 100. Furthermore, the channel estimation unit 204 of the mobile station periodically measures a downlink pilot channel DDPCH, calculates downlink propagation channel quality information (downlink CQI information), and feeds it back to the base station through the control data insertion unit 208.

The OFDM demodulation unit 203 performs OFDM signal demodulation processing such as removal of CPs (Cyclic Prefixes) of an input signal, FFT (Discrete Fourier Transform), multiplication of a spread code and a scrambling code, serial-parallel conversion, data demodulation, and filtering, generates demodulated data, and inputs it to the control data extraction unit 205.

The control data extraction unit 205 extracts downlink channel control information (downlink access information, broadcast information, etc.) other than a downlink shared data channel SDCH. Furthermore, the control data extraction unit 205 extracts downlink AMC information (a downlink AMC mode, downlink scheduling information, etc.) mapped on a downlink shared control signaling channel SCSCH, and outputs it to the OFDM demodulation unit 203 and the channel decoding unit 206. Furthermore, the control data extraction unit 205 extracts uplink AMC information (an uplink AMC mode, uplink scheduling information, etc.) mapped on the downlink shared control signaling channel SCSCH, and outputs it to the modulation unit 209 and the channel coding unit 207.

The OFDM demodulation unit 203 performs demodulation of subcarriers using an AMC mode (e.g. 16QAM) defined by the downlink AMC information. The channel decoding unit 206 performs decoding of packet data destined to the own station mapped on the downlink shared data channel SDCH using an AMC mode (e.g. a turbo code whose coding rate is 2/3) defined by the downlink AMC information.

Uplink transmission data which is individual packet data of the mobile station 200 is input to the channel coding unit 207, which encodes the uplink transmission data using uplink AMC information (e.g. a convolution code whose coding rate is 2/3) which is output from the control data extraction unit 205, and outputs the encoded data to the control data insertion unit 208.

The control data insertion unit 208 maps downlink CQI information from the downlink channel estimation unit 204 onto an uplink shared control signaling channel USCSCH included in an uplink scheduling channel USCH, and maps an uplink contention base channel UCBCH and the uplink scheduling channel USCH onto an uplink transmission signal. Furthermore, the control data insertion unit 208 has the pilot signal control unit 211. The pilot signal control unit 211 controls the operation of resource request (UL RR) based on an indication from the control unit 210. The details will be described below using Fig. 6.

The modulation unit 209 performs data modulation using uplink AMC information (e.g. QPSK) which is output from the control data extraction unit 205, and outputs the modulated data to the transmitter circuit of the wireless unit 202. For the modulation of an uplink signal, an OFDM signal or an MC-CDMA signal may be used and a single carrier SC signal or a VSCRF-CDMA signal may be used to reduce PAPR.

The control unit 210 has mobile station class information, natural frequency bandwidth information, and mobile station identification information. The control unit 210 sends a control signal sifting to a designated or calculated center frequency to the wireless unit 202, which performs center frequency shifting using the local RF frequency oscillating circuit (synthesizer) of the wireless unit 202. In addition, the control unit 210 executes controls in the case that the mobile station requests resources in addition to UL resources currently used. Resource request is made in such a case that data has arrived at a transmission buffer for UL, a new radio bearer is requested, a traffic transmission rate is changed, or UL resources are opened temporarily, as described above. The control unit 210 determines whether resources are necessary in addition to resources currently used by the mobile station, and indicates the pilot signal control unit 211 that resource request is made when determining that additional resources are necessary.

A baseband signal is converted to an RF frequency band signal by the local RF frequency oscillating circuit (synthesizer), up-converter, filter, amplifier, etc. of the wireless unit 202, and an uplink signal is transmitted through the antenna 201. See Non-Patent Document 4 about the various channels.

In each of the following embodiments, the operation of resource request (UL RR) in the wireless communication system composed of the base station shown in Fig. 4 and the mobile station shown in Fig. 5 will be described. Fig. 6 is a flow chart showing an example of the operation of resource request. The left of the figure shows an example of the operation of the mobile station, and the right of the figure shows an example of the operation of the base station. The operation shown in Fig. 6 is an example, and the operation of resource request and the operation of resource allocation will be described using Fig. 6 in each of the following embodiments. However, the operation of each of the embodiments is not limited to the operation shown in Fig. 6.

### (First Embodiment)

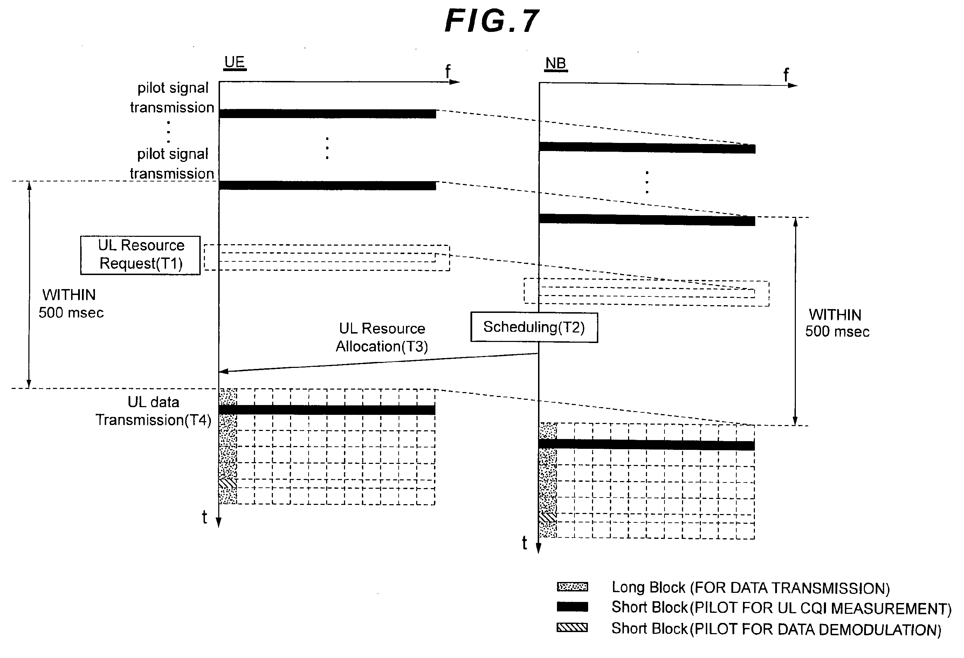

The first embodiment will be described in detail with a mobile station in a DTX/DRX mode as an example using Fig. 7. In this embodiment, there is described one aspect in which the transmission of a pilot signal is stopped and resource request (UL RR) is performed. Fig. 7 is a sequence diagram showing an example of a change of a pilot signal according to a UL resource request in the first embodiment. Fig. 7 shows a sequence diagram of a mobile station (UE) on the left side, and shows a sequence diagram of a base station (NB) on the right side. In Fig. 7, long blocks for data transmission are shaded, short blocks of a pilot for UL CQI measurement are blackened, and short blocks of a pilot for data demodulation are diagonally shaded. The same can be said in similar figures used in the following embodiments. The operation of UL RR will be described below using Figs. 6 and 7.

As shown in Fig.7, it is assumed that the mobile station 200 in a DTX/DRX mode is not always communicating with the base station 100, and is discontinuously transmitting at least a pilot signal for UL CQI measurement (blackened blocks in the upper part of Fig. 7) to the base station 100 in a period when synchronization can be maintained (e.g. every 500 msec at most), at some time-frequency positions, in order to maintain synchronization (pilot signal transmission in Fig. 7). On the other hand, it is assumed that the base station 100 is discontinuously receiving the pilot signal in a period when synchronization can be maintained (e.g. every 500 msec at most). Here, it is assumed that the base station 100 and the mobile station 200 both know time-frequency positions of the pilot signal in advance. Furthermore, it is assumed that periodical transmission of a pilot signal and UL RR are performed independently with each other.

A pilot signal for maintaining synchronization is included in uplink control data. The control data insertion unit 208 performs channel mapping of uplink transmission data and uplink control data for which channel coding has been performed, and the pilot signal is modulated by the modulation unit 209 and is then up-converted to an RF frequency and transmitted to the base station 100 through the transmitting antenna 201 by the wireless unit 202.

In the mobile station 200, the control unit 210 determines whether it is necessary to make UL RR (resource request) (S11). When the mobile station 200 makes UL RR (Yes at S11), the control unit 210 indicates the pilot signal control unit 211 that UL RR is made, and the pilot signal control unit 211 intentionally stops the transmission of the pilot signal (S12). Fig. 7 shows that UL RR was made at the timing of UL Resource Request (T1). A rectangle shown with a dotted line represents timing with which the transmission of the pilot signal was stopped.

In this embodiment, the mobile station 200 notifies the base station 100 of UL RR by intentionally stopping (temporarily stopping) the transmission of a pilot signal, and this operation represents resource request. When no UR RR is needed, the flow returns to the determination at step S11. It is assumed that the base station 100 and the mobile station 200 both know in advance that stopping the transmission of a pilot signal represents UL RR.

The base station 100 receives the pilot signal by the antenna 101, and the pilot signal is down-converted from an RF frequency to a baseband by the wireless unit 102 and is input to the pilot signal detecting unit 111 in the uplink channel estimation unit 104. The base station 100 usually detects the periodical transmission of a pilot signal. However, when the mobile station 200 has made UL RR, the base station 100 does not receive the pilot signal which has been periodically transmitted in a period when synchronization can be maintained. At that time, the pilot signal detecting unit 111 of the base station 100 knows in advance that stopping the transmission of the pilot signal represents UL RR, and therefore detects a change of the pilot signal (Yes at S21) and determines that the change is UL RR. The pilot signal detecting unit 111 then outputs a trigger to the scheduling unit 110 to cause it to perform scheduling. Furthermore, the uplink channel estimation unit 104 calculates uplink propagation channel quality information CQI from the received pilot signal and inputs it to the scheduling unit 110. Uplink AMC information which is an output of the scheduling unit 110 is input to the control data insertion unit 108 and coupled to downlink control data and channel mapping is performed. On the other hand, when the pilot signal detecting unit 111 does not detect UL RR (No at step S21), the flow returns to step S21.

Next, the scheduling unit 110 of the base station 100 performs scheduling increasing resources allocated to an appropriate mobile station using a pilot signal for UL CQI measurement (S22) and then transmits UL RA to the mobile station 200 (S23). In Fig. 7, the scheduling unit 110 of the base station 100 performs scheduling at Scheduling (T2) and transmits UL RA at UL Resource Allocation (T3). At that time, the UL RA includes a UL scheduling grant and information designating the positions of time-frequency resources used for UL data transmission. After that, the UL RA is OFDM-modulated by the OFDM modulation unit 109 and is up-converted to an RF frequency and then transmitted to the mobile station 200 through the antenna 101 by the wireless unit 102.

On the other hand, the mobile station 200 receives the UL RA by the antenna 201. The UL RA is down-converted from an RF frequency to a baseband by the wireless unit 202 and is then input to the control data extraction unit 205 through the downlink channel estimation unit 204 and the OFDM demodulation unit 203. The control data extraction unit 205 extracts UL RA information from the UL RA. The mobile station 200 transmits UL data in a designated AMC mode and at designated time-frequency positions based on the UL RA information. In other words, the mobile station 200 waits for a certain period (S14) and receives the UL RA (S13). When receiving the UL RA in the period (No at S14 and Yes at S13), the mobile station 200 is able to transmit UL data using designated resources (S15). At UL data transmission (T4) in Fig. 7, the mobile station 200 transmits UL data to the base station 100 using regions for data transmission (shaded portions) allocated by the base station 100. Conversely, when the mobile station 200 is not able to receive UL RA even if a certain time has passed (Yes at S14), the flow returns to step S11.

The shorter (1) the transmission interval of the pilot signal or the UL data transmitted to the base station 100 by the mobile station 200 and (2) the reception interval of the pilot signal or the UL data received from the mobile station 200 by the base station 100 are, the more desirable. In this case, the intervals may be, for example, the order of one-subframe length (0.5 msec) or the order of two-subframe length (1 msec). In addition, it is desirable that the intervals are within a period when synchronization can be maintained (e.g. 500 msec or less) at most.

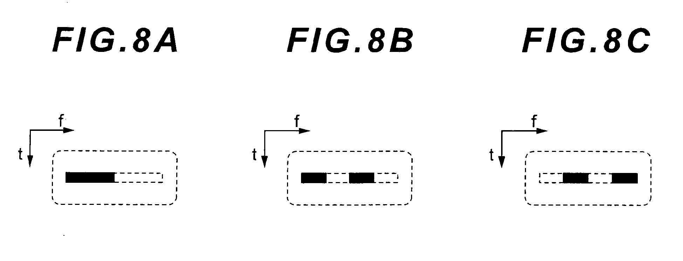

Up to this point, a method of intentionally stopping the transmission of the pilot signal has been described as UL RR method in this embodiment. As UL RR method other than this method, a method of not transmitting part of time-frequency resources secured to transmit the pilot signal from the mobile station 200 to the base station 100 may be used. Figs. 8A-8C show example of resource utilization in the case that part of time-frequency resources secured to transmit a pilot signal is not transmitted; Fig. 8A is an example where the time-frequency resources are divided into two regions, Fig. 8B is an example where the time-frequency resources are divided into four regions, and Fig. 8C is an example where the time-frequency resources are divided into four regions different from Fig. 8B. Any of the methods shown in Figs. 8A to 8C may be used.

Fig. 8A shows a case where time-frequency resources secured to transmit the pilot signal are divided into two regions in the frequency direction and then only resources on the lower frequency side are transmitted and resources on the higher frequency side are not transmitted. The number of subcarries transmitted and the number of subcarriers not transmitted at this time may be one or more.

Fig. 8B shows a case where time-frequency resources secured to transmit the pilot signal are divided into four regions in the frequency direction, which are configured with intervals like transmitted / not-transmitted / transmitted / not-transmitted in ascending order of frequency. The number of subcarries transmitted and the number of subcarriers not transmitted at this time may be one or more.

Fig. 8C shows a case where time-frequency resources secured to transmit the pilot signal are divided into four regions in the frequency direction, which are configured with intervals like not-transmitted / transmitted / not-transmitted / transmitted in ascending order of frequency. The number of subcarries transmitted and the number of subcarriers not transmitted at this time may be one or more.

In addition, UL RR notification method is not limited to the above methods provided that the base station 100 and the mobile station 200 both keep in advance common information about (1) whether changing the method of transmitting the pilot signal represents UL RR and (2) what is used as a change pattern of the pilot signal.

Thus, according to this embodiment, the mobile station is able to notify the base station of resource request by changing the procedure of transmitting a pilot signal (stopping the transmission of a pilot signal in this embodiment) without using resources dedicatedly allocated to make resource request. For this reason, no dedicated resource is needed for resource request and therefore resources can be used effectively.

Note that, in this embodiment, a mobile station in a DTX/DRX mode is described as an example. However, any mobile station where synchronization is maintained (in other words, a mobile station in an active mode) is able to use UL RR method described in this embodiment.

### (Second Embodiment)

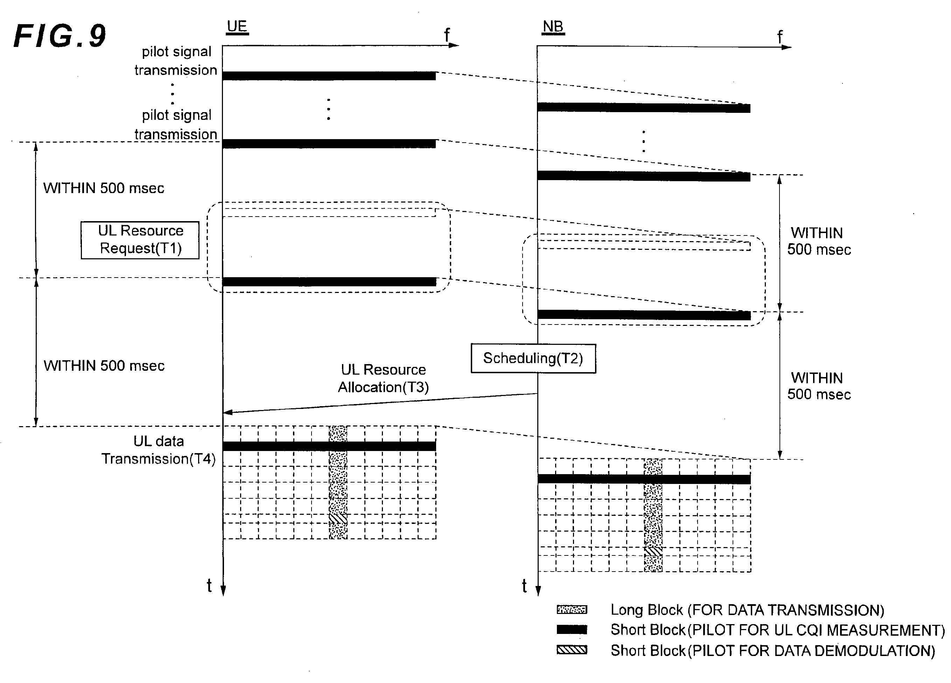

Next, the second embodiment will be described in detail with a mobile station in a DTX/DRX mode as an example using Fig. 9. In this embodiment, there is described one aspect where the transmission of a pilot signal is stopped and is then restarted in a predetermined period to make resource request (UL RR). Fig. 9 is a sequence diagram showing an example of a change of a pilot signal according to a UL resource request in the second embodiment. Fig. 9 shows a sequence diagram of a mobile station (UE) on the left side, and shows a sequence diagram of a base station (NB) on the right side. The operation of UL RR will be described below using Figs. 6 and 9.

As shown in Fig.9, it is assumed that the mobile station 200 in a DTX/DRX mode does not always communicate with the base station 100, and discontinuously transmits at least a pilot signal for UL CQI measurement to the base station 100 in a period when synchronization can be maintained (e.g. every 500 msec at most), at some certain time-frequency positions, in order to maintain synchronization (pilot signal transmission in Fig. 9). On the other hand, it is assumed that the base station 100 discontinuously receives the pilot signal in a period when synchronization can be maintained (e.g. every 500 msec at most). Here, it is assumed that the base station 100 and the mobile station 200 both know time-frequency positions of the pilot signal in advance. Furthermore, it is assumed that periodical transmission of a pilot signal and UL RR are performed independently with each other.

A pilot signal for maintaining synchronization is included in uplink control data. The control data insertion unit 208 performs channel mapping of uplink transmission data and uplink control data for which channel coding has been performed, and the pilot signal is modulated by the modulation unit 209 and is then up-converted to an RF frequency and transmitted to the base station 100 through the transmitting antenna 201 by the wireless unit 202.

In the mobile station 200, the control unit 210 determines whether it is necessary to make UL RR (resource request) (S11). When the mobile station 200 makes UL RR (Yes at S11), the control unit 210 indicates the pilot signal control unit 211 that UL RR is made, and the pilot signal control unit 211 stops the transmission of the pilot signal first. Next, the pilot signal control unit 211 restarts the transmission of the pilot signal (S12). Fig. 9 shows that UL RR was made at the timing of UL Resource Request (T1). A rectangle shown with a dotted line represents timing with which the transmission of the pilot signal was stopped, and the next blackened rectangle shows the transmission of the pilot signal. The two rectangles surrounded with a dotted line correspond to UL RR.

In this embodiment, the mobile station 200 notifies the base station 100 of UL RR by intentionally stopping (temporarily stopping) the transmission of a pilot signal and then transmitting the pilot signal in a predetermined period, and this operation represents resource request. When no UL RR is needed, the flow returns to the determination at step S11. It is assumed that the base station 100 and the mobile station 200 both know in advance that a combination of stopping the transmission of a pilot signal and subsequently transmitting the pilot signal again represents UL RR. This operation corresponds to UL RR. Fig. 9 shows a case where a combination of stopping the transmission of the pilot signal and subsequently transmitting the pilot signal represents UL RR.

The base station 100 receives the pilot signal by the antenna 101, and the pilot signal is down-converted from an RF frequency to a baseband by the wireless unit 102 and is input to the pilot signal detecting unit 111 in the uplink channel estimation unit 104. The base station 100 usually detects the periodical transmission of a pilot signal. However, when the mobile station 200 has made UL RR, the base station 100 does not receive the pilot signal which has been periodically transmitted in a period when synchronization can be maintained, and then receives the pilot signal. At that time, the pilot signal detecting unit 111 of the base station 100 knows in advance a combination of stopping and restarting the transmission of the pilot signal which represents UL RR, and therefore detects a change of the pilot signal (Yes at S21) and determines that the change is UL RR. The pilot signal detecting unit 111 then outputs a trigger to the scheduling unit 110 to cause it to perform scheduling. Furthermore, the uplink channel estimation unit 104 calculates uplink propagation channel quality information CQI from the received pilot signal and inputs it to the scheduling unit 110. Uplink AMC information which is an output of the scheduling unit 110 is input to the control data insertion unit 108 and coupled to downlink control data and channel mapping is performed. On the other hand, when the pilot signal detecting unit 111 does not detect UL RR (No at step S21), the flow returns to step S21.

Next, the scheduling unit 110 of the base station 100 performs scheduling increasing resources allocated to an appropriate mobile station using a pilot signal for UL CQI measurement (S22) and then transmits UL RA to the mobile station 200 (S23). In Fig. 9, the scheduling unit 110 of the base station 100 performs scheduling at Scheduling (T2) and transmits UL RA at UL Resource Allocation (T3). At that time, the UL RA includes a UL scheduling grant and information designating the positions of time-frequency resources used for UL data transmission. After that, the UL RA is OFDM-modulated by the OFDM modulation unit 109 and is up-converted to an RF frequency and then transmitted to the mobile station 200 through the antenna 101 by the wireless unit 102.

On the other hand, the mobile station 200 receives the UL RA by the antenna 201. The UL RA is down-converted from an RF frequency to a baseband by the wireless unit 202 and is then input to the control data extraction unit 205 through the downlink channel estimation unit 204 and the OFDM demodulation unit 203. The control data extraction unit 205 extracts UL RA information from the UL RA. The mobile station 200 transmits UL data in a designated AMC mode and at designated time-frequency positions based on the UL RA information. In other words, the mobile station 200 waits for a certain period (S14) and receives the UL RA (S13). When receiving the UL RA in the period (No at S14 and Yes at S13), the mobile station 200 is able to transmit UL data using designated resources (S15).

At UL data transmission (T4) in Fig. 9, the mobile station 200 transmits UL data to the base station 100 using regions for data transmission (shaded portions) allocated by the base station 100. Conversely, when the mobile station 200 is not able to receive UL RA even if a certain time has passed (Yes at S14), the flow returns to step S11. The shorter (1) the transmission interval of the pilot signal or the UL data transmitted to the base station by the mobile station and (2) the reception interval of the pilot signal or the UL data received from the mobile station by the base station are, the more desirable. In this case, the intervals may be, for example, the order of one-subframe length (0.5 msec) or the order of two-subframe length (1 msec). In addition, it is desirable that the intervals are within a period when synchronization can be maintained (e.g. 500 msec or less) at most in this embodiment.

Up to this point, a method of using a combination of stopping the transmission of the pilot signal and subsequently transmitting the pilot signal has been described as UL RR method. As UL RR method other than this method, transmission patterns shown in Figs. 10A to 10D may be used as the pilot signal transmitted from the mobile station 200 to the base station 100 may be used. Fig. 10 shows examples of resource utilization in the case where part of time-frequency resources secured to transmit a pilot signal is not transmitted. Any of the methods shown in Figs. 10A to 10D may be used.

Fig. 10A shows a pattern of transmitting the pilot signal in the order of not-transmitted / transmitted / not-transmitted / transmitted in the time direction without changing the transmission bandwidth of the pilot signal of time-frequency resources secured to transmit the pilot signal.

Fig. 10B shows a pattern of transmitting the pilot signal in the order of not-transmitted / transmitted / transmitted in the time direction without changing the transmission bandwidth of the pilot signal of time-frequency resources secured to transmit the pilot signal.

Fig. 10C shows a pattern of transmitting the pilot signal in the order of not-transmitted / not-transmitted / transmitted in the time direction without changing the transmission bandwidth of the pilot signal of time-frequency resources secured to transmit the pilot signal.

Fig. 10D shows a pattern of transmitting the pilot signal in the order of not-transmitted / transmitted in the time direction with respect to the whole band of time-frequency resources secured to transmit the pilot signal, wherein when the pilot signal is transmitted, the time-frequency resources secured to transmit the pilot signal are divided into four regions in the frequency direction in the order of transmitted / not-transmitted / transmitted / not transmitted in increasing order of frequency.

In addition, a method of expressing the UL RR is not limited to the above methods provided that the base station 100 and the mobile station 200 both have in advance common information about (1) whether changing the method of transmitting the pilot signal represents UL RR and (2) what is used as a change pattern of the pilot signal.

Thus, according to this embodiment, the mobile station is able to notify the base station of resource request by changing the procedure of transmitting a pilot signal (a combination of stopping and restarting the transmission of a pilot signal in this embodiment) without using resources dedicatedly allocated to make resource request. For this reason, no dedicated resource is needed for resource request and therefore resources can be used effectively.

In this embodiment, a mobile station in a DTX/DRX mode is described as an example. However, any mobile station where synchronization is maintained (in other words, a mobile station in an active mode) is able to use UL RR method described in this embodiment.

### (Third Embodiment)

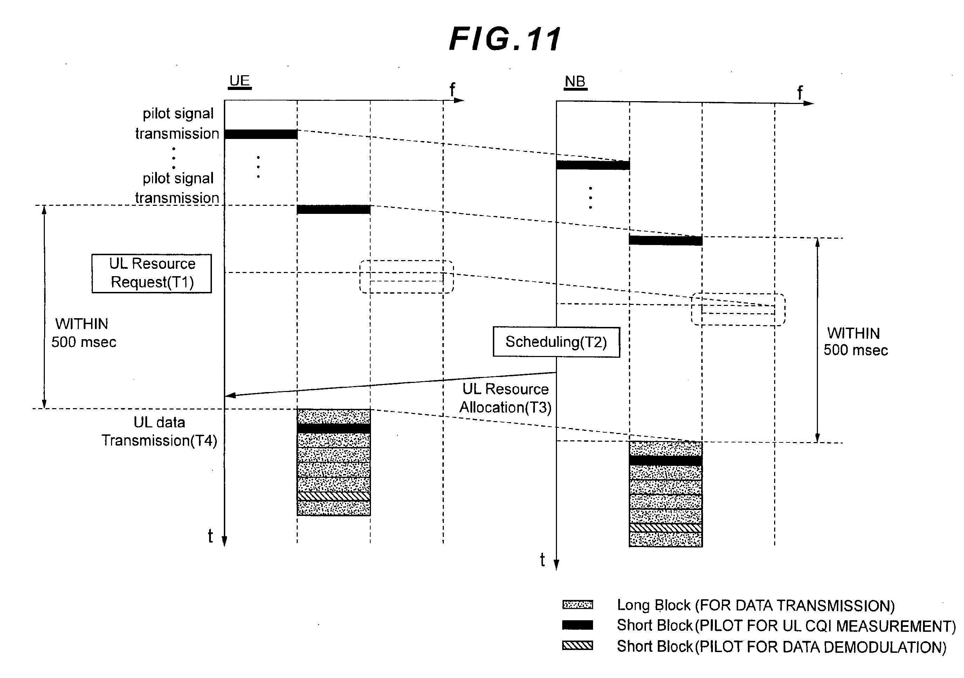

The third embodiment will be described in detail with a mobile station in a DTX/DRX mode as an example using Fig. 11. In this embodiment, there is described an aspect where when a pilot signal is transmitted with the transmission band thereof being changed with time, the transmission of the pilot signal is stopped to make resource request (UL RR). Fig. 11 is a sequence diagram showing an example of a change of a pilot signal according to a UL resource request in the third embodiment. Fig. 11 shows a sequence diagram of a mobile station (UE) on the left side, and shows a sequence diagram of a base station (NB) on the right side. The operation of UL RR will be described below using Figs. 6 and 11.

As shown in Fig. 11, it is assumed that the mobile station 200 in a DTX/DRX mode does not always communicate with the base station 100, and discontinuously transmits a pilot signal for UL CQI measurement to the base station 100 in a period when synchronization can be maintained (e.g. every 500 msec at most), while changing time-frequency positions with time, in order to maintain synchronization at least (pilot signal transmission in Fig. 11). Fig. 11 shows that the mobile station 200 uses a different predetermined frequency region every time it transmits a pilot signal for UL CQI measurement. On the other hand, the base station 100 discontinuously receives the pilot signal in a period when synchronization can be maintained (e.g. every 500 msec at most). Here, it is assumed that the base station 100 and the mobile station 200 both know in advance time-frequency positions of the pilot signal which are changed with time. Furthermore, it is assumed that periodical transmission of a pilot signal and UL RR are performed independently with each other.

A pilot signal for maintaining synchronization is included in uplink control data. The control data insertion unit 208 performs channel mapping of uplink transmission data and uplink control data for which channel coding has been performed, and the pilot signal is modulated by the modulation unit 209 and is then up-converted to an RF frequency and transmitted to the base station 100 through the transmitting antenna 201 by the wireless unit 202.

In the mobile station 200, the control unit 210 determines whether it is necessary to make UL RR (S11). When the mobile station 200 makes UL RR (Yes at S11), the control unit 210 indicates the pilot signal control unit 211 that UL RR is made, and the pilot signal control unit 211 intentionally stops the transmission of the pilot signal which has been sent from uplink control data and has been periodically transmitted from the mobile station in a period when synchronization can be maintained while time-frequency positions thereof have been changed with time (S12) . Fig. 11 shows that UL RR was made at the timing of UL Resource Request (T1). A rectangle shown with a dotted line represents timing with which the transmission of the pilot signal was stopped. The rectangle surrounded with a dotted line corresponds to UL RR.

In this embodiment, the mobile station 200 notifies the base station 100 of UL RR by intentionally stopping (temporarily stopping) the transmission of a pilot signal, and this operation represents resource request. When no UL RR is needed, the flow returns to the determination at step S11. It is assumed that the base station 100 and the mobile station 200 both know in advance that stopping the transmission of a pilot signal represents UL RR.

The base station 100 receives the pilot signal by the antenna 101, and the pilot signal is down-converted from an RF frequency to a baseband by the wireless unit 102 and is input to the pilot signal detecting unit 111 in the uplink channel estimation unit 104. When the mobile station 200 has made UL RR, the base station 100 comes not to receive the pilot signal which has been periodically transmitted from the mobile station in a period when synchronization can be maintained, while time-frequency positions thereof have been changed with time. At that time, the pilot signal detecting unit 111 of the base station 100 knows in advance that stopping the transmission of the pilot signal represents UL RR, and therefore detects a change of the pilot signal (Yes at S21) and determines that the change is UL RR. The pilot signal detecting unit 111 then outputs a trigger to the scheduling unit 110 to cause it to perform scheduling. Furthermore, the uplink channel estimation unit 104 calculates uplink propagation channel quality information CQI from the received pilot signal and inputs it to the scheduling unit 110. Uplink AMC information which is an output of the scheduling unit 110 is input to the control data insertion unit 108 and coupled to downlink control data and channel mapping is performed. On the other hand, when the pilot signal detecting unit 111 does not detect UL RR (No at step S21), the flow returns to step S21.

Next, the scheduling unit 110 of the base station 100 performs scheduling increasing resources allocated to an appropriate mobile station using a pilot signal for UL CQI measurement (S22) and then transmits UL RA to the mobile station 200 (S23). In Fig. 11, the scheduling unit 110 of the base station 100 performs scheduling at Scheduling (T2) and transmits UL RA at UL Resource Allocation (T3). At that time, the UL RA includes a UL scheduling grant and information designating the positions of time-frequency resources used for UL data transmission. After that, the UL RA is OFDM-modulated by the OFDM modulation unit 109 and is up-converted to an RF frequency and then transmitted to the mobile station 200 through the antenna 101 by the wireless unit 102. In this connection, it is desirable that the positions of time-frequency resources for transmitting UL data designated by the base station 100 are frequency positions where the latest pilot signal for UL CQI measurement has been received in a stage before UL RR is made. However, positions designated by the base station 100 are not limited to these frequency positions. Fig. 11 shows a case where desirable frequency positions have been designated.

On the other hand, the mobile station 200 receives the UL RA by the antenna 201. The UL RA is down-converted from an RF frequency to a baseband by the wireless unit 202 and is then input to the control data extraction unit 205 through the downlink channel estimation unit 204 and the OFDM demodulation unit 203. The control data extraction unit 205 extracts UL RA information from the UL RA. The mobile station 200 transmits UL data in a designated AMC mode and at designated time-frequency positions based on the UL RA information. In other words, the mobile station 200 waits for a certain period (S14) and receives the UL RA (S13). When receiving the UL RA in the period (No at S14 and Yes at S13), the mobile station 200 is able to transmit UL data using designated resources (S15).

At UL data transmission (T4) in Fig. 11, the mobile station 200 transmits UL data to the base station 100 using regions for data transmission (shaded portions) allocated by the base station 100. Conversely, when the mobile station 200 is not able to receive UL RA even if a certain time has passed (Yes at S14), the flow returns to step S11. The shorter (1) the transmission interval of the pilot signal or the UL data transmitted to the base station by the mobile station and (2) the reception interval of the pilot signal or the UL data received from the mobile station by the base station are, the more desirable. In this case, the intervals may be, for example, the order of one-subframe length (0.5 msec) or the order of two-subframe length (1 msec). In addition, it is desirable that the intervals are within a period when synchronization can be maintained (e.g. 500 msec or less) at most.

Up to this point, a method of intentionally stopping the transmission of the pilot signal has been described as UL RR method in this method. As UL RR method other than this method, a method of not transmitting part of time-frequency resources secured to transmit the pilot signal from the mobile station 200 to the base station 100 may be used as same as the first embodiment. In this case, the methods shown in Figs. 8A to 8C may be used.

In addition, a method of expressing the UL RR is not limited to the above methods provided that both the base station and the mobile station have in advance common information about (1) whether changing the method of transmitting the pilot signal represents UL RR and (2) what is used as a change pattern of the pilot signal.

Thus, according to this embodiment, the mobile station is able to notify the base station of resource request by changing the procedure of transmitting a pilot signal (stopping the transmission of a pilot signal in this embodiment) without using resources dedicatedly allocated to make resource request. For this reason, no dedicated resource is needed for resource request and therefore resources can be used effectively.

In this embodiment, a mobile station in a DTX/DRX mode is described as an example. However, any mobile station where synchronization is maintained (in other words, a mobile station in an active mode) is able to use UL RR method described in this embodiment.

### (Fourth Embodiment)

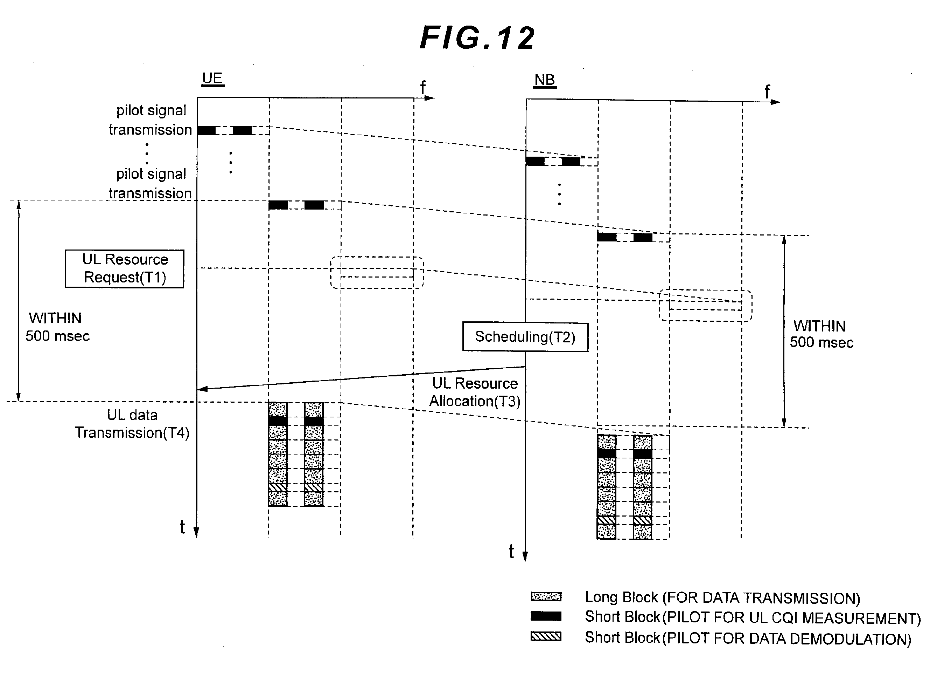

The fourth embodiment will be described in detail with a mobile station in a DTX/DRX mode as an example using Fig. 12. In this embodiment, there is described an aspect where when a pilot signal is transmitted with the transmission band thereof being changed with time and respective frequency bands are divided into two or more regions in which the pilot signals are arranged at intervals, the transmission of the pilot signal is stopped to make UL RR. Fig. 12 is a sequence diagram showing an example of a change of a pilot signal according to a UL resource request in the fourth embodiment. Fig. 12 shows a sequence diagram of a mobile station (UE) on the left side, and shows a sequence diagram of a base station (NB) on the right side. The operation of UL RR will be described below using Figs. 6 and 12.

As shown in Fig. 12, it is assumed that the mobile station 200 in a DTX/DRX mode does not always communicate with the base station 100, and discontinuously transmits a pilot signal for UL CQI measurement, which is configured, after dividing the time-frequency resources into four regions in the frequency direction as shown in Fig. 8B while changing time-frequency positions with time, to be arranged with intervals like transmitted / not-transmitted / transmitted / not-transmitted in ascending order of frequency to the base station 100 in a period when synchronization can be maintained (e.g. every 500 msec at most), in order to maintain synchronization at least (pilot signal transmission in Fig. 12). On the other hand, the base station 100 discontinuously receives the pilot signal in a period when synchronization can be maintained (e.g. every 500 msec at most). Here, it is assumed that both the base station 100 and the mobile station 200 know in advance time-frequency positions of the pilot signal which are changed with time. Furthermore, it is assumed that periodical transmission of a pilot signal and UL RR are performed independently with each other.

A pilot signal for maintaining synchronization is included in uplink control data. The control data insertion unit 208 performs channel mapping of uplink transmission data and uplink control data for which channel coding has been performed, and the pilot signal is modulated by the modulation unit 209 and is then up-converted to an RF frequency and transmitted to the base station 100 through the transmitting antenna 201 by the wireless unit 202.

In the mobile station 200, the control unit 210 determines whether it is necessary to make UL RR (S11). When the mobile station 200 makes UL RR (Yes at S11), the control unit 210 indicates the pilot signal control unit 211 that UL RR is made, and the pilot signal control unit 211 intentionally stops the transmission of the pilot signal (S12). In other words, the pilot signal control unit 211 intentionally stops the transmission of a pilot signal for UL CQI measurement which has been sent from uplink control data and is configured, after dividing the time-frequency resources into four regions in the frequency direction while changing time-frequency positions with time, to be arranged with intervals like transmitted / not-transmitted / transmitted / not-transmitted in increasing order of frequency. This operation corresponds to UL RR. Fig. 12 shows that UL RR was made at the timing of UL Resource Request (T1). A rectangle shown with a dotted line represents timing with which the transmission of the pilot signal was stopped. The rectangle surrounded with a dotted line corresponds to UL RR.

In this embodiment, the mobile station 200 notifies the base station 100 of UL RR by intentionally stopping (temporarily stopping) the transmission of a pilot signal, and this operation corresponds to UL RR. When no UL RR is needed, the flow returns to the determination at step S11. It is assumed that both the base station 100 and the mobile station 200 know in advance that stopping the transmission of the pilot signal represents UL RR.

The base station 100 receives the pilot signal by the antenna 101, and the pilot signal is down-converted from an RF frequency to a baseband by the wireless unit 102 and is input to the pilot signal detecting unit 111 in the uplink channel estimation unit 104. When the mobile station 200 has made UL RR, the base station 100 comes not to receive the pilot signal which has been periodically transmitted from the mobile station in a period when synchronization can be maintained, while time-frequency positions thereof have been changed with time. At that time, the pilot signal detecting unit 111 of the base station 100 knows in advance that stopping the transmission of the pilot signal represents UL RR, and therefore detects a change of the pilot signal (Yes at S21) and determines that the change is UL RR. The pilot signal detecting unit 111 then outputs a trigger to the scheduling unit 110 to cause it to perform scheduling. Furthermore, the uplink channel estimation unit 104 calculates uplink propagation channel quality information CQI from the received pilot signal and inputs it to the scheduling unit 110. Uplink AMC information which is an output of the scheduling unit 110 is input to the control data insertion unit 108 and coupled to downlink control data and channel mapping is performed. On the other hand, when the pilot signal detecting unit 111 does not detect UL RR (No at step S21), the flow returns to step S21.

Next, the scheduling unit 110 of the base station 100 performs scheduling increasing resources allocated to an appropriate mobile station using a pilot signal for UL CQI measurement (S22) and then transmits UL RA to the mobile station 200 (S23). In Fig. 12, the scheduling unit 110 of the base station 100 performs scheduling at Scheduling (T2) and transmits UL RA at UL Resource Allocation (T3). At that time, the UL RA includes a UL scheduling grant and information designating the positions of time-frequency resources used for UL data transmission. Furthermore, it is desirable that the positions of time-frequency resources for transmitting UL data designated by the base station 100 are frequency positions where the latest pilot signal for UL CQI measurement has been received in a stage before UL RR is made. However, positions designated by the base station 100 are not limited to these frequency positions. Fig. 12 shows a case where desirable frequency positions have been designated. After that, the UL RA is OFDM-modulated by the OFDM modulation unit 109 and is up-converted to an RF frequency and then transmitted to the mobile station 200 through the antenna 101 by the wireless unit 102.

On the other hand, the mobile station 200 receives the UL RA by the antenna 201. The UL RA is down-converted from an RF frequency to a baseband by the wireless unit 202 and is then input to the control data extraction unit 205 through the downlink channel estimation unit 204 and the OFDM demodulation unit 203. The control data extraction unit 205 extracts UL RA information from the UL RA. The mobile station 200 transmits UL data in a designated AMC mode and at designated time-frequency positions based on the UL RA information. In other words, the mobile station waits for a certain period (S14) and receives the UL RA (S13). When receiving the UL RA in the period (No at S14 and Yes at S13), the mobile station is able to transmit UL data using designated resources (S15). At UL data transmission (T4) in Fig. 12, the mobile station 200 transmits UL data to the base station 100 using regions for data transmission (shaded portions) allocated by the base station 100. Conversely, when the mobile station 200 is not able to receive UL RA even if a certain time has passed (Yes at S14), the flow returns to step S11.

The shorter (1) the transmission interval of the pilot signal or the UL data transmitted to the base station by the mobile station and (2) the reception interval of the pilot signal or the UL data received from the mobile station by the base station are, the more desirable. In this case, the intervals may be, for example, the order of one-subframe length (0.5 msec) or the order of two-subframe length (1 msec). In addition, it is desirable that the intervals are within a period when synchronization can be maintained (e.g. 500 msec or less) at most.

Up to this point, a method of intentionally stopping the transmission of the pilot signal has been described as UL RR method in this method. As UL RR method other than this method, a method in which the transmission pattern of the pilot signal has been replaced with a transmission pattern shown in Fig. 8A or Fig. 8C may be used. Furthermore, the blackened portions shown in Fig. 12 may be divided, as shown in Figs. 8A to 8C, into two regions A, four regions B, or different four regions C.

In addition, a method of expressing the UL RR is not limited to the above methods provided that both the base station 100 and the mobile station 200 have in advance common information about (1) whether changing the method of transmitting the pilot signal represents UL RR and (2) what is used as a change pattern of the pilot signal.

Thus, according to this embodiment, the mobile station is able to notify the base station of resource request by changing the procedure of transmitting a pilot signal (stopping the transmission of a pilot signal in this embodiment) without using resources dedicatedly allocated to make resource request. For this reason, no dedicated resource is needed for resource request and therefore resources can be used effectively.

In this embodiment, a mobile station in a DTX/DRX mode is described as an example. However, any mobile station where synchronization is maintained (in other words, a mobile station in an active mode) is able to use UL RR method described in this embodiment.

### (Fifth Embodiment)

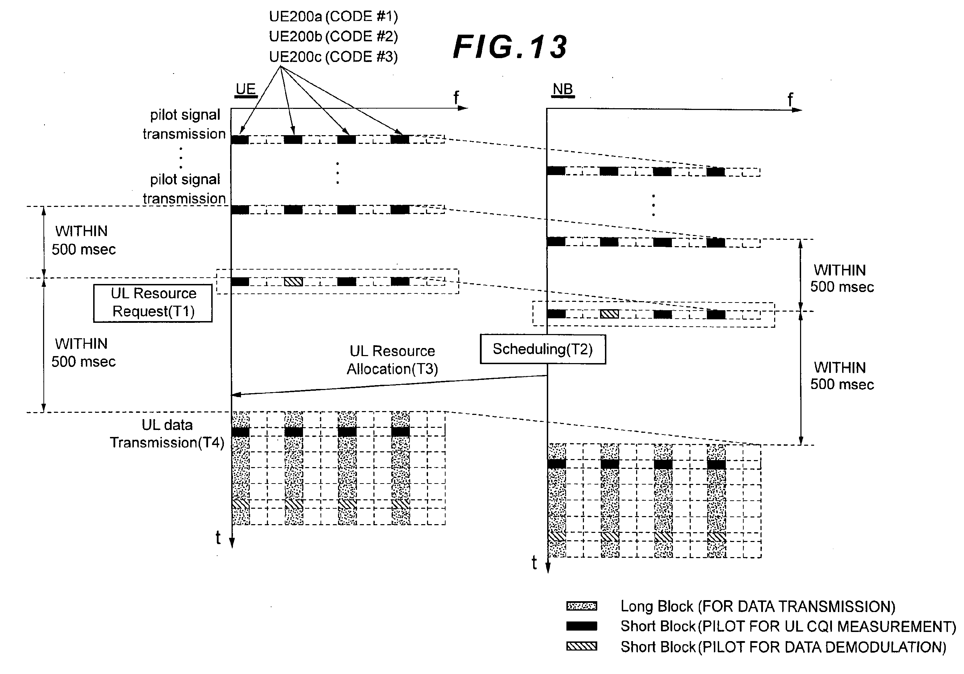

Next, the fifth embodiment will be described in detail with a mobile station in a DTX/DRX mode as an example using Fig. 13. In this embodiment, there is described an aspect where when pilot signals are arranged in a distributed manner and in which two or more mobile stations are multiplexed using orthogonal codes, a mobile station which will make resource request (UL RR) stops the transmission of the pilot signal in some regions to make resource request. Fig. 13 is a sequence diagram showing an example of a change of a pilot signal according to a UL resource request in the fifth embodiment. Fig. 13 shows a sequence diagram of a mobile station (UE) on the left side, and shows a sequence diagram of a base station (NB) on the right side. The operation of UL RR will be described below using Figs. 6 and 13.

As shown in Fig. 13, it is assumed that the mobile station 200 in a DTX/DRX mode does not always communicate with the base station 100, and discontinuously transmits a pilot signal for UL CQI measurement in a period when synchronization can be maintained (e.g. every 500 msec at most), in order to maintain synchronization at least (pilot signal transmission in Fig. 13). Furthermore, Fig. 13 shows that the mobile stations 200 transmit pilot signals, which are arranged in a distributed manner and multiplexed using different orthogonal codes for each of two or more mobile stations 200 in the same time-frequency positions, to the base station 100, as pilots for UL CQI measurement. On the other hand, the base station 100 discontinuously receives the pilot signal in a period when synchronization can be maintained (e.g. every 500 msec at most). Here, it is assumed that both the base station 100 and the mobile station 200 know in advance the time-frequency positions of the pilot signal. Furthermore, it is assumed that periodical transmission of a pilot signal and UL RR are performed independently with each other.

A pilot signal for maintaining synchronization is included in uplink control data. The control data insertion unit 208 performs channel mapping of uplink transmission data and uplink control data for which channel coding has been performed, and the pilot signal is modulated by the modulation unit 209 and is then up-converted to an RF frequency and transmitted to the base station 100 through the transmitting antenna 201 by the wireless unit 202.

In this embodiment, pilot signals which are arranged in a distributed manner and multiplexed using an orthogonal code are used. Specifically, the following case will be described as an example. Arrangement in a distributed manner is a state where there are certain intervals between frequency bands used in a frequency region (a state where pilot signals are arranged in the shape of a comb), and Fig. 2 shows an example of it. In Fig. 2, diagonally shaded regions represent frequency bands used. Furthermore, the case is described where a CAZAC (Constant Amplitude Zero Auto-Correlation) code is used as an orthogonal code multiplexing the pilot signals which are used by each mobile station 200. CAZAC codes are excellent in auto-correlation characteristic.

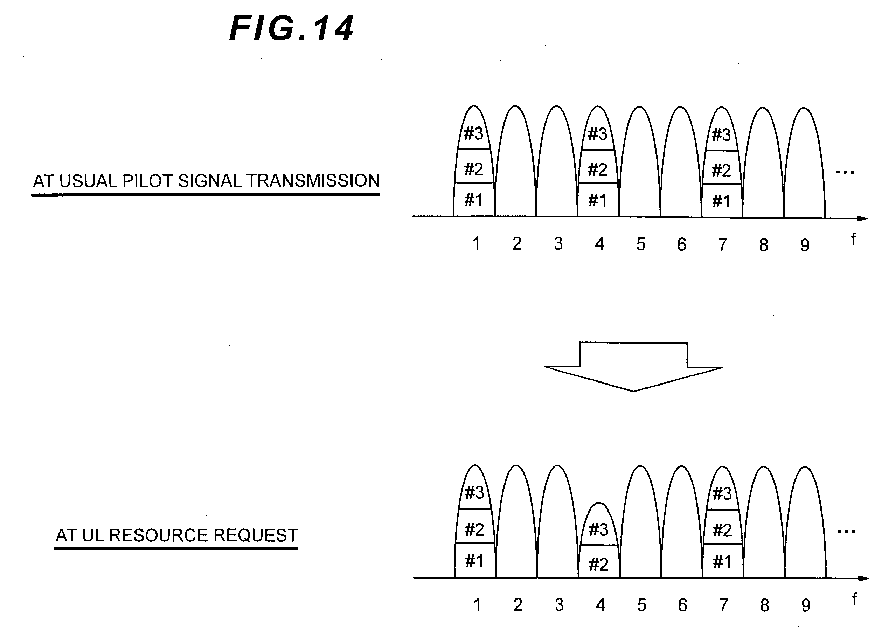

In this embodiment, it is assumed that the base station 100 allocates CAZAC codes of different sequences to mobile stations 200 to distinguish the mobile stations 200 from each other. Furthermore, the case is described where the mobile stations 200 perform UL transmission using CAZAC codes allocated. In addition, multiplexing of two or more mobile stations 200 becomes possible in frequency regions arranged in a distributed manner by using CAZAC codes. An example of it is shown in the upper part of Fig. 14. Fig. 14 shows an example of a state in the frequency direction of resources for transmitting a pilot signal of this embodiment. The upper part of it shows an example of a state at usual pilot signal transmission and the lower part of it shows an example of a state at resource request (UL Resource Request). In the upper part of Fig. 14, "#1" represents a CAZAC code used by a mobile station 200a, "#2" represents a CAZAC code used by a mobile station 200b, and "#3" represents a CAZAC code used by a mobile station 200c, and a state where the three mobile stations are multiplexed in the same frequency region (a state where the three mobile stations 200 are using the same frequency region at the same time) is shown.

Fig. 13 shows a state where the mobile stations 200a, 200b, and 200c are intermittently transmitting the pilot signals in the same time-frequency region by using the different CAZAC codes #1, #2, and #3 in a period when synchronization can be maintained. Here, it is assumed that both the base station 100 and the mobile stations 200 know in advance the time-frequency positions of the pilot signals and which CAZAC codes are allocated to the mobile stations 200.

In a mobile station 200, the control unit 210 determines whether it is necessary to make UL RR (S11). When the mobile station 200 makes UL RR (Yes at S11), the control unit 210 indicates the pilot signal control unit 211 that UL RR is made, and the pilot signal control unit 211 intentionally stops the transmission of the pilot signal with respect to part of time-frequency regions arranged in a distributed manner (S12). In other words, the pilot signal control unit 211 intentionally stops the transmission of part of pilot signals for UL CQI measurement which are the pilot signals sent from uplink control data and are arranged in a distributed manner, and in which mobile stations are multiplexed using different orthogonal codes (e.g. CAZAC codes) in the same time-frequency positions. This operation corresponds to UL RR. Here, a case where the mobile station 200a makes UL RR is described as an example.

Fig. 13 shows that UL RR was made at the timing of UL Resource Request (T1) (a rectangle surrounded by a dotted line corresponds to the UL RR), and a region with positive slopes represents a transmission stop position of the pilot signal in the UL RR. This operation corresponds to UL RR. When no UL RR is needed (No at S11), the flow returns to the determination at S11. It is assumed that both the base station 100 and the mobile station 200 know in advance that stopping the transmission of the pilot signal represents UL RR and where the stop position is.

The base station 100 receives the pilot signal by the antenna 101, and the pilot signal is down-converted from an RF frequency to a baseband by the wireless unit 102 and is input to the pilot signal detecting unit 111 in the uplink channel estimation unit 104. The base station 100 comes not to receive part of the pilot signals which has been periodically transmitted until now from the mobile station 200 in a period when synchronization can be maintained. At that time, the pilot signal detecting unit 111 of the base station 100 knows in advance that stopping the transmission of the pilot signal represents UL RR and where the stop position is, and therefore detects a change of the pilot signals (Yes at S21) and determines that the change is UL RR. The pilot signal detecting unit 111 then outputs a trigger to the scheduling unit 110 to cause it to perform scheduling. Furthermore, the uplink channel estimation unit 104 calculates uplink propagation channel quality information CQI from the received pilot signal and inputs it to the scheduling unit 110. Uplink AMC information which is an output of the scheduling unit 110 is input to the control data insertion unit 108 and coupled to downlink control data and channel mapping is performed. On the other hand, when the pilot signal detecting unit 111 does not detect UL RR (No at step S21), the flow returns to step S21.

Next, the scheduling unit 110 of the base station 100 performs scheduling increasing resources allocated to an appropriate mobile station using a pilot signal for UL CQI measurement (S22) and then transmits UL RA to the mobile station 200 (S23). In Fig. 13, the scheduling unit 110 of the base station 100 performs scheduling at Scheduling (T2) and transmits UL RA at UL Resource Allocation (T3). At that time, the UL RA includes a UL scheduling grant and information designating the positions of time-frequency resources used for UL data transmission. Furthermore, it is desirable that the positions of time-frequency resources for transmitting UL data designated by the base station 100 are frequency positions where the latest pilot signal for UL CQI measurement has been received in a stage before UL RR is made. However, positions designated by the base station 100 are not limited to these frequency positions. Fig. 13 shows an example that a region where the mobile station 200 stopped the transmission of a pilot signal (a region with positive slopes) was also designated as the position of a time-frequency resource for transmitting UL data. After that, the UL RA is OFDM-modulated by the OFDM modulation unit 109 and is up-converted to an RF frequency and then transmitted to the mobile station 200 through the antenna 101 by the wireless unit 102.

On the other hand, the mobile station 200 receives the UL RA by the antenna 201. The UL RA is down-converted from an RF frequency to a baseband by the wireless unit 202 and is then input to the control data extraction unit 205 through the downlink channel estimation unit 204 and the OFDM demodulation unit 203. The control data extraction unit 205 extracts UL RA information from the UL RA. The mobile station 200 transmits UL data in a designated AMC mode and at designated time-frequency positions based on the UL RA information. In other words, the mobile station 200 waits for a certain period (S14) and receives the UL RA (S13). When receiving the UL RA in the period (No at S14 and Yes at S13), the mobile station 200 is able to transmit UL data using designated resources (S15). At UL data transmission (T4) in Fig. 13, the mobile station 200 (mobile station 200a in Fig. 13) transmits UL data to the base station 100 using regions for data transmission (shaded portions) allocated by the base station 100. Conversely, when the mobile station 200 is not able to receive UL RA even if a certain time has passed (Yes at S14), the flow returns to step S11.

Additional description will be made to the above using Fig. 14. A state in the frequency direction at a certain time of resources for transmitting the pilot signal in a stage other than UL RR stage is shown in the upper part of Fig. 14. Furthermore, a state in the frequency direction at a certain time of resources for transmitting the pilot signal at UL RR is shown in the lower part of Fig. 14. In the upper part of Fig. 14 showing a stage other than UL RR stage, the mobile stations 200a, 200b, and 200c are transmitting the pilot signals using CAZAC codes #1, #2, and #3, respectively, in the frequency regions 1, 4, and 7. In the lower part of Fig. 14 showing UL RR stage, the mobile stations 200b and 200c are transmitting the pilot signals using CAZAC codes #2 and #3, respectively, in the frequency regions 1, 4, and 7, while only the mobile station 200a is not transmitting the pilot signal in the frequency region 4.

In the base station 100, the pilot signal detecting unit 111 detects that the mobile station 200a which has stopped the transmission of the pilot signal by CAZAC code #1 makes UL RR, and the scheduling unit 110 performs scheduling and transmits UL RA to the mobile station 200a.

The shorter (1) the transmission interval of the pilot signal or the UL data transmitted to the base station by a mobile station and (2) the reception interval of the pilot signal or the UL data received from a mobile station by the base station are, the more desirable. In this case, the intervals may be, for example, the order of one-subframe length (0.5 msec) or the order of two-subframe length (1 msec). In addition, it is desirable that the intervals are within a period when synchronization can be maintained (e.g. 500 msec or less) at most.

Up to this point, a method of intentionally stopping the transmission of the pilot signal has been described as UL RR method in this embodiment. However, the UL RR method is not limited to the above method provided that both the base station and the mobile station have in advance common information about (1) whether changing the method of transmitting the pilot signal represents UL RR and (2) what is used as a change pattern of the pilot signal. For example, in the lower part of Fig. 14, the transmission of all the pilot signals in the frequency regions 1, 4 and 7 may be stopped.

Furthermore, in this embodiment, there is described an example that the base station 100 allocates CAZAC codes of different sequences to mobile stations 200 to distinguish the mobile stations 200 from each other. However, any other method may be used provided that the base station 100 is able to distinguish the mobile stations 200 from each other.

Thus, according to this embodiment, a mobile station is able to notify the base station of resource request by changing the procedure of transmitting a pilot signal (stopping the transmission of a pilot signal of a mobile station which will make UL RR in this embodiment) without using resources dedicatedly allocated to make resource request. For this reason, no dedicated resource is needed for resource request and therefore resources can be used effectively.

In this embodiment, a mobile station in a DTX/DRX mode is described as an example. However, any mobile station where synchronization is maintained (in other words, a mobile station in an active mode) is able to use UL RR method described in this embodiment.

### (Sixth Embodiment)

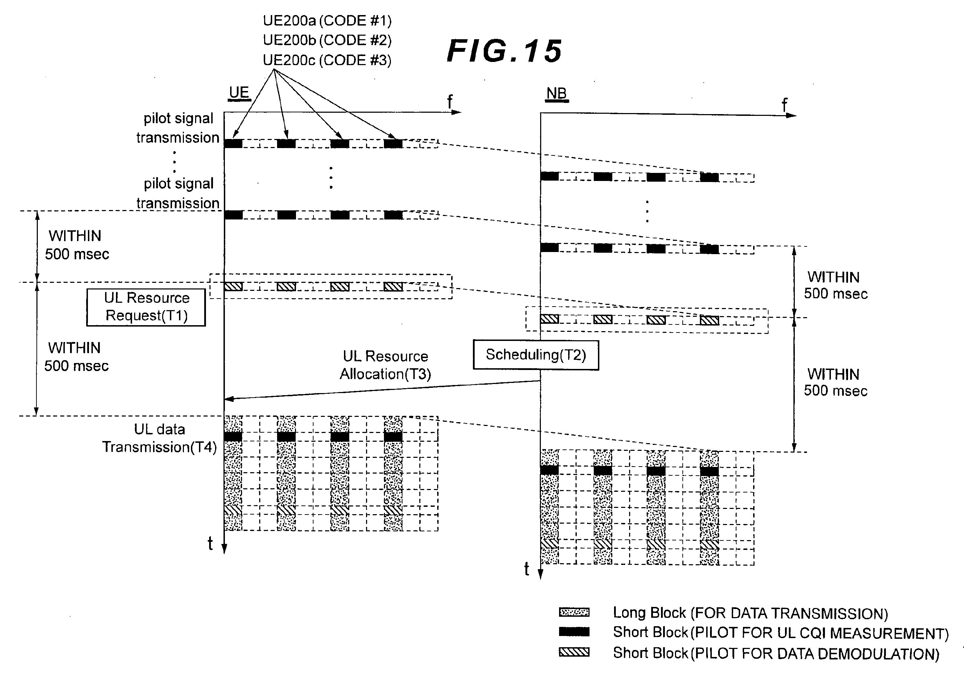

The sixth embodiment will be described in detail with a mobile station in a DTX/DRX mode as an example using Fig. 15. In this embodiment, when pilot signals are used which are arranged in a distributed manner and multiplexed using orthogonal codes by two or more mobile stations, mobile stations which will make resource request make resource request by multiplexing the pilot signals using orthogonal codes which are different from usual ones. Fig. 15 is a sequence diagram showing an example of a change of a pilot signal according to a UL resource request in the sixth embodiment. Fig. 15 shows a sequence diagram of a mobile station (UE) on the left side, and shows a sequence diagram of a base station (NB) on the right side. The operation of UL RR will be described below using Figs. 6 and 15.

As shown in Fig. 15, it is assumed that the mobile station 200 in a DTX/DRX mode does not always communicate with the base station 100, and discontinuously transmits a pilot signal for UL CQI measurement in a period when synchronization can be maintained (e.g. every 500 msec at most), in order to maintain synchronization at least (pilot signal transmission in Fig. 15). Furthermore, Fig. 15 shows that the mobile stations 200 transmit pilot signals which are arranged in a distributed manner and multiplexed using different orthogonal codes by two or more mobile stations 200 in the same time-frequency positions, to the base station 100, as pilots for UL CQI measurement. On the other hand, the base station 100 discontinuously receives the pilot signal in a period when synchronization can be maintained (e.g. every 500 msec at most). Here, it is assumed that both the base station 100 and the mobile station 200 know in advance the time-frequency positions of the pilot signal. Furthermore, it is assumed that periodical transmission of a pilot signal and UL RR are performed independently with each other.

A pilot signal for maintaining synchronization is included in uplink control data. The control data insertion unit 208 performs channel mapping of uplink transmission data and uplink control data for which channel coding has been performed, and the pilot signal is modulated by the modulation unit 209 and is then up-converted to an RF frequency and transmitted to the base station 100 through the transmitting antenna 201 by the wireless unit 202.

In this embodiment, the case is described where CAZAC codes are used as a method of multiplexing the pilot signals by each mobile station 200 arranged in a distributed manner. Specifically, it is assumed that the base station 100 allocates CAZAC codes of different sequences to mobile stations 200 to distinguish the mobile stations 200 from each other, and CAZAC codes #1 and #4 are allocated to a mobile station 200a, CAZAC codes #2 and #5 are allocated to a mobile station 200b, and the CAZAC codes #3 and #6 are allocated to a mobile station 200c. Then, the mobile stations 200 perform UL transmission using the CAZAC codes allocated.

Fig. 15 shows a state where the mobile stations 200a, 200b, and 200c are discontinuously transmitting the pilot signals in the same time-frequency regions by using the different CAZAC codes #1, #2, and #3 in a period when synchronization can be maintained, and the pilot signals are multiplexed. Here, it is assumed that both the base station 100 and the mobile stations 200 know in advance the time-frequency positions of the pilot signals and which CAZAC codes are allocated to the mobile stations 200.

In a mobile station 200, the control unit 210 determines whether it is necessary to make UL RR (S11). When the mobile station 200 makes UL RR (Yes at S11), the control unit 210 indicates the pilot signal control unit 211 that UL RR is made, and the pilot signal control unit 211 transmits the pilot signal using a CAZAC code which is different from a CAZAC code which has been used until now in time-frequency regions arranged in a distributed manner (S12). In other words, the pilot signal control unit 211 transmits the pilot signal using a CAZAC code which is different from a CAZAC code which has been used until now in time-frequency positions arranged in a distributed manner. This operation corresponds to UL RR. Here, a case where the mobile station 200a makes UL RR is described as an example.

Fig. 15 shows that UL RR was made at the timing of UL Resource Request (T1) (a rectangle surrounded by a dotted line corresponds to the UL RR), and the pilot signal is transmitted using a CAZAC code which is different from a CAZAC code which has been used until now in regions with positive slopes in the UL RR. This operation corresponds to UL RR. When no UL RR is needed (No at S11), the flow returns to the determination at S11. It is assumed that both the base station 100 and the mobile station 200 know in advance that transmitting the pilot signal using a CAZAC code which is different from a CAZAC code which has been used until now represents UL RR.

The base station 100 receives the pilot signal by the antenna 101, and the pilot signal is down-converted from an RF frequency to a baseband by the wireless unit 102 and is input to the pilot signal detecting unit 111 in the uplink channel estimation unit 104. The base station 100 detects that a different CAZAC code is used for the pilot signal which has been periodically transmitted until now from the mobile station 200 in a period when synchronization can be maintained. At that time, the pilot signal detecting unit 111 of the base station 100 knows in advance that transmitting the pilot signal using a CAZAC code which is different from a CAZAC code which has been used until now represents UL RR, and therefore determines that a change of the pilot signal is UL RR (Yes at S21). The pilot signal detecting unit 111 then outputs a trigger to the scheduling unit 110 to cause it to perform scheduling. Furthermore, the uplink channel estimation unit 104 calculates uplink propagation channel quality information CQI from the received pilot signal and inputs it to the scheduling unit 110. Uplink AMC information which is an output of the scheduling unit 110 is input to the control data insertion unit 108 and coupled to downlink control data and channel mapping is performed. On the other hand, when the pilot signal detecting unit 111 does not detect UL RR (No at step S21), the flow returns to step S21.

Next, the scheduling unit 110 of the base station 100 performs scheduling increasing resources allocated to an appropriate mobile station using a pilot signal for UL CQI measurement (S22) and then transmits UL RA to the mobile station 200 (S23). In Fig. 15, the scheduling unit 110 of the base station 100 performs scheduling at Scheduling (T2) and transmits UL RA at UL Resource Allocation (T3). At that time, the UL RA includes a UL scheduling grant and information designating the positions of time-frequency resources used for UL data transmission. Furthermore, it is desirable that positions of time-frequency resources for transmitting UL data designated by the base station 100 are frequency positions where the latest pilot signal for UL CQI measurement has been received in a stage before UL RR is made. However, positions designated by the base station 100 are not limited to these frequency positions. Fig. 15 shows an example that regions where the mobile station 200 changed the transmission of a pilot signal (regions with positive slopes) were designated as the positions of time-frequency resources for transmitting UL data. After that, the UL RA is OFDM-modulated by the OFDM modulation unit 109 and is up-converted to an RF frequency and then transmitted to the mobile station 200 through the antenna 101 by the wireless unit 102.

On the other hand, the mobile station 200 receives the UL RA by the antenna 201. The UL RA is down-converted from an RF frequency to a baseband by the wireless unit 202 and is then input to the control data extraction unit 205 through the downlink channel estimation unit 204 and the OFDM demodulation unit 203. The control data extraction unit 205 extracts UL RA information from the UL RA. The mobile station 200 transmits UL data in a designated AMC mode and at designated time-frequency positions based on the UL RA information. In other words, the mobile station 200 waits for a certain period (S14) and receives the UL RA (S13). When receiving the UL RA in the period (No at S14 and Yes at S13), the mobile station 200 is able to transmit UL data using designated resources (S15). At UL data transmission (T4) in Fig. 15, the mobile station 200 (mobile station 200a in Fig. 15) transmits UL data to the base station 100 using regions for data transmission (shaded portions) allocated by the base station 100. Conversely, when the mobile station 200 is not able to receive UL RA even if a certain time has passed (Yes at S14), the flow returns to step S11.

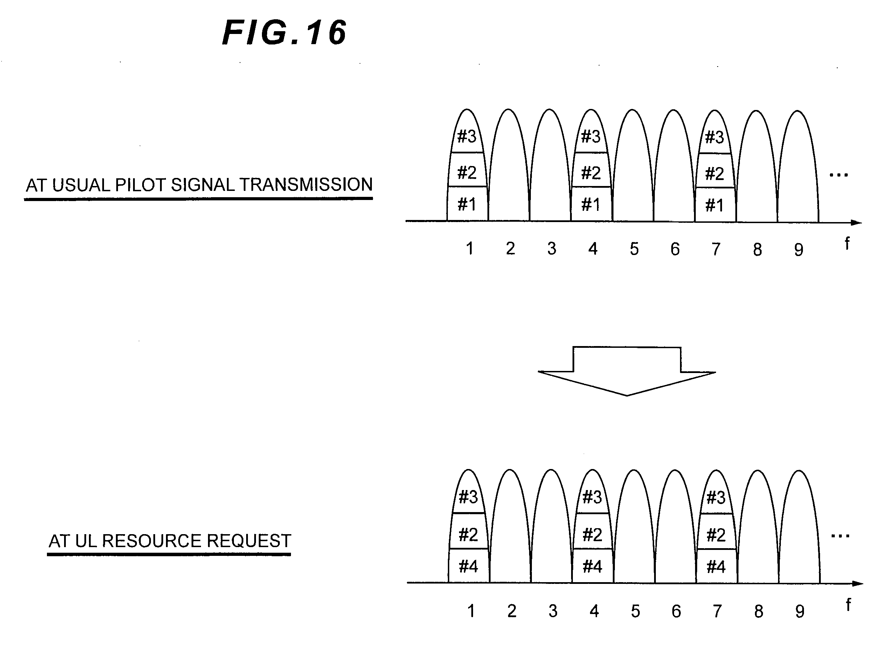

Additional description will be made to the above using Fig. 16. Fig. 16 shows an example of a state in the frequency direction of resources for transmitting a pilot signal of this embodiment. A state in the frequency direction at a certain time of resources for transmitting the pilot signals in a stage other than UL RR stage is shown in the upper part of Fig. 16. Furthermore, a state in the frequency direction at a certain time of resources for transmitting the pilot signals at UL RR is shown in the lower part of Fig. 16. In the upper part of Fig. 16 showing a stage other than UL RR stage, the mobile stations 200a, 200b, and 200c are transmitting the pilot signals using CAZAC codes #1, #2, and #3, respectively, in the frequency regions 1, 4, and 7. In the lower part of Fig. 16 showing UL RR stage, the mobile stations 200b and 200c are transmitting the pilot signals using CAZAC codes #2 and #3, respectively, while the mobile station 200a is transmitting the pilot signal using CAZAC code #4, in the frequency regions 1, 4, and 7

In the base station 100, the pilot signal detecting unit 111 detects that the mobile station 200a which has transmitted the pilot signal using not CAZAC code #1 but CAZAC code #4 makes UL RR, and the scheduling unit 110 performs scheduling and transmits UL RA to the mobile station 200a.

The shorter (1) the transmission interval of the pilot signal or the UL data transmitted to the base station by a mobile station and (2) the reception interval of the pilot signal or the UL data received from a mobile station by the base station are, the more desirable. In this case, the intervals may be, for example, the order of one-subframe length (0.5 msec) or the order of two-subframe length (1 msec). In addition, it is desirable that the intervals are within a period when synchronization can be maintained (e.g. 500 msec or less) at most.

Up to this point, a method of intentionally changing an orthogonal code used to transmit the pilot signal has been described as UL RR method in this embodiment. However, the UL RR method is not limited to the above method provided that both the base station and the mobile stations have in advance common information about (1) whether changing the method of transmitting the pilot signal represents UL RR and (2) what is used as a change pattern of the pilot signal.

Furthermore, in this embodiment, the case is described as an example where the base station 100 allocates the CAZAC codes of different sequences to mobile stations 200 to distinguish the mobile stations 200 from each other. However, any other method may be used provided that the base station 100 is able to distinguish the mobile stations 200 from each other.

Thus, according to this embodiment, a mobile station is able to notify the base station of resource request by changing the procedure of transmitting a pilot signal (changing a code used by a mobile station which will make UL RR in this embodiment) without using resources dedicatedly allocated to make resource request. For this reason, no dedicated resource is needed for resource request and therefore resources can be used effectively.

In this embodiment, a mobile station in a DTX/DRX mode is described as an example. However, any mobile station where synchronization is maintained (in other words, a mobile station in an active mode) is able to use UL RR method described in this embodiment.

### (Seventh Embodiment)

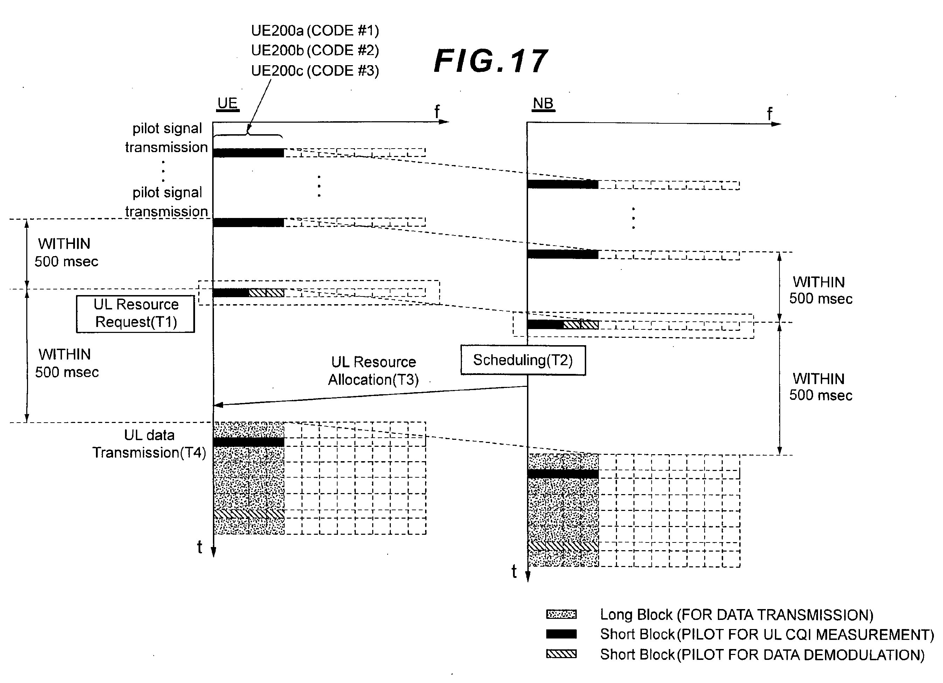

The seventh embodiment will be described in detail with a mobile station in a DTX/DRX mode as an example using Fig. 17. In this embodiment, there is described an aspect where when pilot signals are used which are arranged in a localized manner and in which two or more mobile stations are multiplexed using orthogonal codes, a mobile station which will make resource request stops the transmission of the pilot signal in some regions to make resource request. Fig. 17 is a sequence diagram showing an example of a change of a pilot signal according to a UL resource request in the seventh embodiment. Fig. 17 shows a sequence diagram of a mobile station (UE) on the left side, and shows a sequence diagram of a base station (NB) on the right side. The operation of UL RR will be described below using Figs. 6 and 17.

As shown in Fig. 17, it is assumed that the mobile station 200 in a DTX/DRX mode does not always communicate with the base station 100, and discontinuously transmits a pilot signal for UL CQI measurement in a period when synchronization can be maintained (e.g. every 500 msec at most), in order to maintain synchronization at least (pilot signal transmission in Fig. 13). Furthermore, Fig. 17 shows that the mobile stations 200 transmit pilot signals which are arranged in a localized manner and in which two or more mobile stations 200 are multiplexed using different orthogonal codes in the same time-frequency positions, to the base station 100, as pilots for UL CQI measurement. On the other hand, the base station 100 discontinuously receives the pilot signal in a period when synchronization can be maintained (e.g. every 500 msec at most). Here, it is assumed that both the base station 100 and the mobile station 200 know in advance the time-frequency positions of the pilot signal. Furthermore, it is assumed that periodical transmission of a pilot signal and UL RR are performed independently with each other.

A pilot signal for maintaining synchronization is included in uplink control data. The control data insertion unit 208 performs channel mapping of uplink transmission data and uplink control data for which channel coding has been performed, and the pilot signal is modulated by the modulation unit 209 and is then up-converted to an RF frequency and transmitted to the base station 100 through the transmitting antenna 201 by the wireless unit 202.

In this embodiment, pilot signals which are arranged in a localized manner and multiplexed using orthogonal codes are used. Specifically, the following case is described as an example. Arrangement in a localized manner is a state where spectrums are continuously arranged in frequency regions, and Fig. 3 shows an example of it. In Fig. 3, diagonally shaded regions represent frequency bands used.

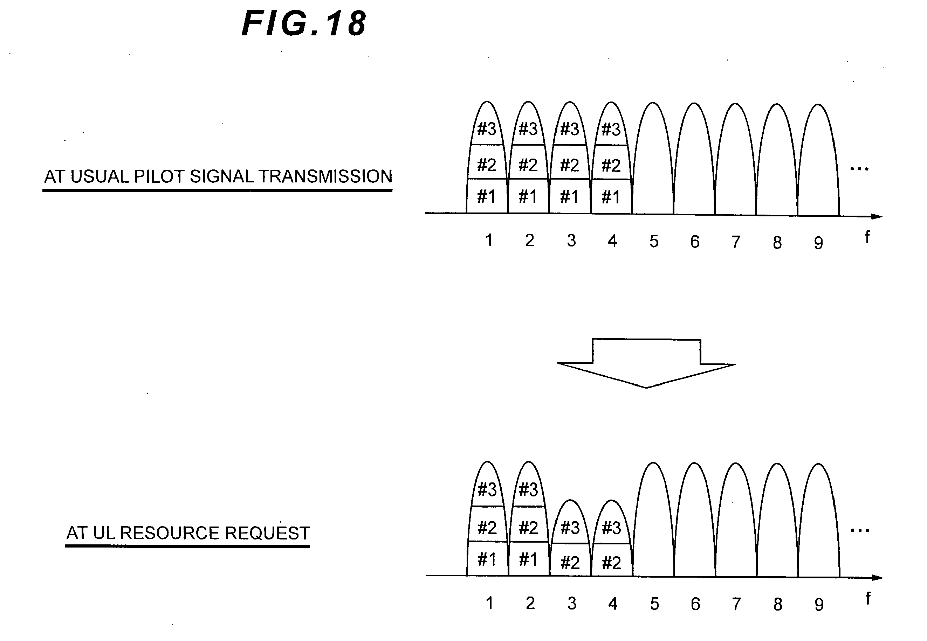

In this embodiment, it is assumed that the base station 100 allocates CAZAC codes of different sequences to mobile stations 200 to distinguish the mobile stations 200 from each other. Furthermore, the case is described where the mobile stations 200 perform UL transmission using CAZAC codes allocated. In addition, multiplexing of two or more mobile stations 200 becomes possible in frequency regions arranged in a localized manner by using CAZAC codes. An example of it is shown in the upper part of Fig. 18. Fig. 18 shows an example of a state in the frequency direction of resources for transmitting a pilot signal of this embodiment. The upper part of it shows an example of a state at usual pilot signal transmission and the lower part of it shows an example of a state at resource request. In the upper part of Fig. 18, "#1" represents a CAZAC code used by a mobile station 200a, "#2" represents a CAZAC code used by a mobile station 200b, and "#3" represents a CAZAC code used by a mobile station 200c, and a state where the pilot signals of the three mobile stations are multiplexed in the same frequency regions (a state where the three mobile stations 200 are using the same frequency regions at the same time) is shown.

Fig. 17 shows a state where the mobile stations 200a, 200b, and 200c are discontinuously transmitting the pilot signal in the same time-frequency regions by using the different CAZAC codes #1, #2, and #3 in a period when synchronization can be maintained. Here, it is assumed that both the base station 100 and the mobile stations 200 know in advance the time-frequency positions of the pilot signals and which CAZAC codes are allocated to the mobile stations 200.

In a mobile station 200, the control unit 210 determines whether it is necessary to make UL RR (S11). When the mobile station 200 makes UL RR (Yes at S11), the control unit 210 indicates the pilot signal control unit 211 that UL RR is made, and the pilot signal control unit 211 intentionally stops the transmission of the pilot signal with respect to part of time-frequency regions arranged in a localized manner (S12). In other words, the pilot signal control unit 211 starts the processing procedure shown in Fig. 6 (left) by receiving UL RR trigger described above. The pilot signal control unit 211 intentionally stops the transmission of the pilot signal sent from uplink control data, with respect to part of time-frequency regions arranged in a localized manner. This operation corresponds to UL RR. Here, a case where the mobile station 200a makes UL RR is described as an example.

Fig. 17 shows that UL RR was made at the timing of UL Resource Request (T1) (a rectangle surrounded by a dotted line corresponds to the UL RR), and a region with positive slopes represents a transmission stop position of the pilot signal in the UL RR. This operation corresponds to UL RR. When no UL RR is needed (No at S11), the flow returns to the determination at step S11. It is assumed that both the base station 100 and the mobile station 200 know in advance that stopping the transmission of the pilot signal represents UL RR and where the stop position is.

The base station 100 receives the pilot signal by the antenna 101, and the pilot signal is down-converted from an RF frequency to a baseband by the wireless unit 102 and is input to the pilot signal detecting unit 111 in the uplink channel estimation unit 104. The base station 100 comes not to receive part of the pilot signals which have been periodically transmitted until now from the mobile station 200 in a period when synchronization can be maintained. At that time, the pilot signal detecting unit 111 of the base station 100 knows in advance that stopping the transmission of the pilot signal represents UL RR and where the stop position is, and therefore detects a change of the pilot signal (Yes at S21) and determines that the change is UL RR. The pilot signal detecting unit 111 then outputs a trigger to the scheduling unit 110 to cause it to perform scheduling. Furthermore, the uplink channel estimation unit 104 calculates uplink propagation channel quality information CQI from the received pilot signal and inputs it to the scheduling unit 110. Uplink AMC information which is an output of the scheduling unit 110 is input to the control data insertion unit 108 and coupled to downlink control data and channel mapping is performed. On the other hand, when the pilot signal detecting unit 111 does not detect UL RR (No at step S21), the flow returns to step S21.

Next, the scheduling unit 110 of the base station 100 performs scheduling increasing resources allocated to an appropriate mobile station using a pilot signal for UL CQI measurement (S22) and then transmits UL RA to the mobile station 200 (S23). In Fig. 17, the scheduling unit 110 of the base station 100 performs scheduling at Scheduling (T2) and transmits UL RA at UL Resource Allocation (T3). At that time, the UL RA includes a UL scheduling grant and information designating the positions of time-frequency resources used for UL data transmission. Furthermore, it is desirable that the positions of time-frequency resources for transmitting UL data designated by the base station 100 are frequency positions where the latest pilot signal for UL CQI measurement has been received in a stage before UL RR is made. However, positions designated by the base station 100 are not limited to these frequency positions. Fig. 17 shows an example that a region where the mobile station 200 stopped the transmission of a pilot signal (a region with positive slopes) was also designated as the position of a time-frequency resource for transmitting UL data. After that, the UL RA is OFDM-modulated by the OFDM modulation unit 109 and is up-converted to an RF frequency and then transmitted to the mobile station 200 through the antenna 101 by the wireless unit 102.

On the other hand, the mobile station 200 receives the UL RA by the antenna 201. The UL RA is down-converted from an RF frequency to a baseband by the wireless unit 202 and is then input to the control data extraction unit 205 through the downlink channel estimation unit 204 and the OFDM demodulation unit 203. The control data extraction unit 205 extracts UL RA information from the UL RA. The mobile station 200 transmits UL data in a designated AMC mode and at designated time-frequency positions based on the UL RA information. The mobile station 200 waits for a certain period (S14) and receives the UL RA (S13). When receiving the UL RA in the period (No at S14 and Yes at S13), the mobile station 200 is able to transmit UL data using designated resources (S15). At UL data transmission (T4) in Fig. 17, the mobile station 200 (mobile station 200a in Fig. 17) transmits UL data to the base station 100 using regions for data transmission (shaded portions) allocated by the base station 100. Conversely, when the mobile station 200 is not able to receive UL RA even if a certain time has passed (Yes at S14), the flow returns to step S11.

Additional description will be made to the above using Fig. 18. A state in the frequency direction at a certain time of resources for transmitting the pilot signal in a stage other than UL RR stage is shown in the upper part of Fig. 18. Furthermore, a state in the frequency direction at a certain time of resources for transmitting the pilot signal at UL RR is shown in the lower part of Fig. 18.

In the upper part of Fig. 18 showing a stage other than UL RR stage, the mobile stations 200a, 200b, and 200c are transmitting the pilot signals using CAZAC codes #1, #2, and #3, respectively, in the frequency regions 1, 2, 3, and 4. In the lower part of Fig. 18 showing UL RR stage, the mobile stations 200b and 200c are transmitting the pilot signals using CAZAC codes #2 and #3, respectively, in the frequency regions 1, 2, 3, and 4, while the mobile station 200a is transmitting the pilot signal using CAZAC code #1 in the frequency regions 1 and 2, but is not transmitting the pilot signal in the frequency regions 3 and 4.

In the base station 100, the pilot signal detecting unit 111 detects that the mobile station 200a which has stopped the transmission of the pilot signal by CAZAC code #1 in the frequency regions 3 and 4 makes UL RR, and the scheduling unit 110 performs scheduling and transmits UL RA to the mobile station 200a.

The shorter (1) the transmission interval of the pilot signal or the UL data transmitted to the base station by a mobile station and (2) the reception interval of the pilot signal or the UL data received from a mobile station by the base station are, the more desirable. In this case, the intervals may be, for example, the order of one-subframe length, that is, the order of 0.5 msec. In addition, it is desirable that the intervals are within a period when synchronization can be maintained (e.g. 500 msec or less) at worst.

Up to this point, a method of intentionally stopping the transmission of the pilot signal has been described as UL RR method in this embodiment. However, the UL RR method is not limited to the above method provided that both the base station and the mobile stations have in advance common information about (1) whether changing the method of transmitting the pilot signal represents UL RR and (2) what is used as a change pattern of the pilot signal.

Furthermore, in this embodiment, it is described as an example that the base station 100 allocates the CAZAC codes of different sequences to mobile stations to distinguish the mobile stations from each other. However, any other method may be used provided that the base station is able to distinguish the mobile stations from each other.

Thus, according to this embodiment, a mobile station is able to notify the base station of resource request by changing the procedure of transmitting a pilot signal (stopping the transmission of a pilot signal of a mobile station which will make UL RR in this embodiment) without using resources dedicatedly allocated to make resource request. For this reason, no dedicated resource is needed for resource request and therefore resources can be used effectively.

In this embodiment, a mobile station in a DTX/DRX mode is described as an example. However, any mobile station where synchronization is maintained (in other words, a mobile station in an active mode) is able to use UL RR method described in this embodiment.

### (Eighth Embodiment)

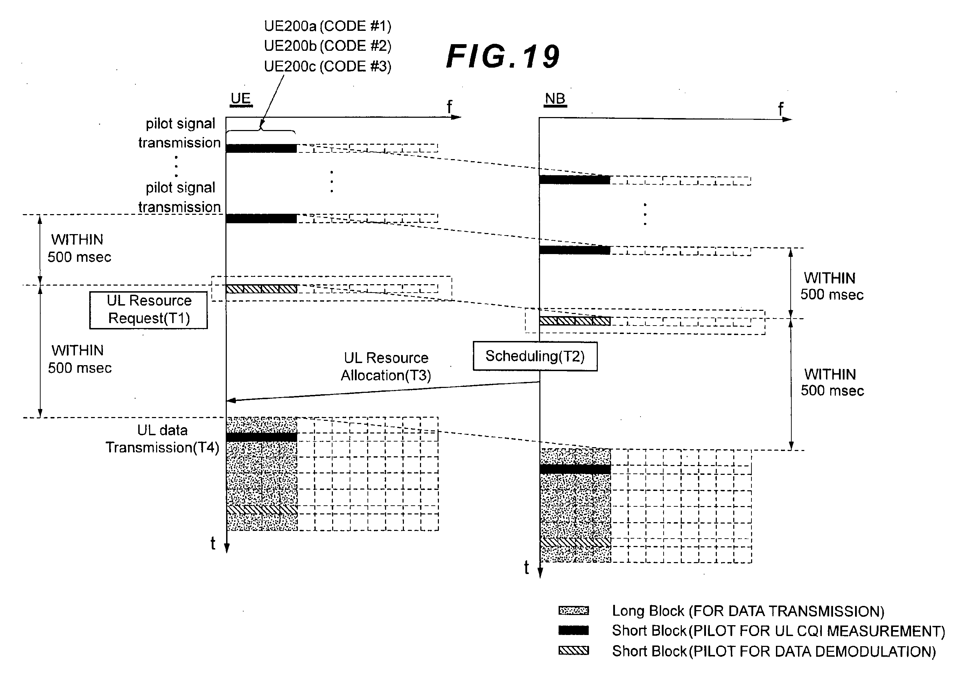

Next, the eighth embodiment will be described in detail with a mobile station in a DTX/DRX mode as an example using Fig. 19. In this embodiment, there is described an aspect where when pilot signals are used which are arranged in a localized manner and in which two or more mobile stations are multiplexed using orthogonal codes, a mobile station which will make resource request makes a resource request by multiplexing the pilot signals using orthogonal codes which are different from usual ones. Fig. 19 is a sequence diagram showing an example of a change of a pilot signal according to a UL resource request in the eighth embodiment. Fig. 19 shows a sequence diagram of a mobile station (UE) on the left side, and shows a sequence diagram of a base station (NB) on the right side. The operation of UL RR will be described below using Figs. 6 and 19.

As shown in Fig. 19, it is assumed that the mobile station 200 in a DTX/DRX mode does not always communicate with the base station 100, and discontinuously transmits a pilot signal for UL CQI measurement in a period when synchronization can be maintained (e.g. every 500 msec at most), in order to maintain synchronization at least (pilot signal transmission in Fig. 19). Furthermore, Fig. 19 shows that the mobile stations 200 transmit pilot signals which are arranged in a localized manner and in which two or more mobile stations 200 are multiplexed using different orthogonal codes in the same time-frequency positions, to the base station 100, as pilots for UL CQI measurement. On the other hand, the base station 100 discontinuously receives the pilot signal in a period when synchronization can be maintained (e.g. every 500 msec at most). Here, it is assumed that both the base station 100 and the mobile station 200 know in advance the time-frequency positions of the pilot signals. Furthermore, it is assumed that periodical transmission of a pilot signal and UL RR are performed independently with each other.

A pilot signal for maintaining synchronization is included in uplink control data. The control data insertion unit 208 performs channel mapping of uplink transmission data and uplink control data for which channel coding has been performed, and the pilot signal is modulated by the modulation unit 209 and is then up-converted to an RF frequency and transmitted to the base station 100 through the transmitting antenna 201 by the wireless unit 202.

In this embodiment, the case is described where each mobile station 200 uses a CAZAC code to multiplex the pilot signals arranged in a localized manner. Specifically, it is assumed that the base station 100 allocates CAZAC codes of different sequences to mobile stations 200 to distinguish the mobile stations 200 from each other, and CAZAC codes #1 and #4 are allocated to a mobile station 200a, CAZAC codes #2 and #5 are allocated to a mobile station 200b, and the CAZAC codes #3 and #6 are allocated to a mobile station 200c. Then, the mobile stations 200 perform UL transmission using the CAZAC codes allocated.

Fig. 19 shows a state where the mobile stations 200a, 200b, and 200c are discontinuously transmitting the pilot signals in the same time-frequency regions by using the different CAZAC codes #1, #2, and #3 in a period when synchronization can be maintained, and the pilot signals are multiplexed. Here, it is assumed that both the base station 100 and the mobile stations 200 know in advance the time-frequency positions of the pilot signal and which CAZAC codes are allocated to the mobile stations 200.

In a mobile station 200, the control unit 210 determines whether it is necessary to make UL RR (S11). When the mobile station 200 makes UL RR (Yes at S11), the control unit 210 indicates the pilot signal control unit 211 that UL RR is made, and the pilot signal control unit 211 transmits the pilot signal using a CAZAC code which is different from a CAZAC code which has been used until now in time-frequency regions arranged in a localized manner (S12). In other words, the pilot signal control unit 211 transmits the pilot signal using a CAZAC code which is different from a CAZAC code which has been used until now in time-frequency positions arranged in a localized manner. This operation corresponds to UL RR. Here, a case where the mobile station 200a makes UL RR is described as an example.

Fig. 19 shows that UL RR was made at the timing of UL Resource Request (T1) (a rectangle surrounded by a dotted line corresponds to the UL RR), and the pilot signal is transmitted using a CAZAC code which is different from a CAZAC code which has been used in regions with positive slopes in the UL RR. This operation corresponds to UL RR. When no UL RR is needed (No at S11), the flow returns to the determination at S11. It is assumed that both the base station 100 and the mobile station 200 know in advance that transmitting the pilot signal using a CAZAC code which is different from a CAZAC code which has been used until now represents UL RR.

The base station 100 receives the pilot signal by the antenna 101, and the pilot signal is down-converted from an RF frequency to a baseband by the wireless unit 102 and is input to the pilot signal detecting unit 111 in the uplink channel estimation unit 104. The base station 100 detects that a different CAZAC code is used for the pilot signal which has been periodically transmitted until now from the mobile station 200 in a period when synchronization can be maintained. At that time, the pilot signal detecting unit 111 of the base station 100 knows in advance that transmitting the pilot signal using a CAZAC code which is different from a CAZAC code which has been used until now represents UL RR, and therefore determines that a change of the pilot signal is UL RR (Yes at S21). The pilot signal detecting unit 111 then outputs a trigger to the scheduling unit 110 to cause it to perform scheduling. Furthermore, the uplink channel estimation unit 104 calculates uplink propagation channel quality information CQI from the received pilot signal and inputs it to the scheduling unit 110. Uplink AMC information which is an output of the scheduling unit 110 is input to the control data insertion unit 108 and coupled to downlink control data and channel mapping is performed. On the other hand, when the pilot signal detecting unit 111 does not detect UL RR (No at step S21), the flow returns to step S21.

Next, the scheduling unit 110 of the base station 100 performs scheduling increasing resources allocated to an appropriate mobile station using a pilot signal for UL CQI measurement (S22) and then transmits UL RA to the mobile station 200 (S23). In Fig. 19, the scheduling unit 110 of the base station 100 performs scheduling at Scheduling (T2) and transmits UL RA at UL Resource Allocation (T3). At that time, the UL RA includes a UL scheduling grant and information designating the positions of time-frequency resources used for UL data transmission. Furthermore, it is desirable that the positions of time-frequency resources for transmitting UL data designated by the base station 100 are frequency positions where the latest pilot signal for UL CQI measurement has been received in a stage before UL RR is made. However, positions designated by the base station 100 are not limited to these frequency positions. Fig. 19 shows an example that a region where the mobile station 200 changed the transmission of a pilot signal (a region with positive slopes) was designated as the position of a time-frequency resource for transmitting UL data. After that, the UL RA is OFDM-modulated by the OFDM modulation unit 109, and is up-converted to an RF frequency and then transmitted to the mobile station 200 through the antenna 101 by the wireless unit 102.

On the other hand, the mobile station 200 receives the UL RA by the antenna 201. The UL RA is down-converted from an RF frequency to a baseband by the wireless unit 202 and is then input to the control data extraction unit 205 through the downlink channel estimation unit 204 and the OFDM demodulation unit 203. The control data extraction unit 205 extracts UL RA information from the UL RA. The mobile station 200 transmits UL data in a designated AMC mode and at designated time-frequency positions based on the UL RA information. In other words, the mobile station 200 waits for a certain period (S14) and receives the UL RA (S13). When receiving the UL RA in the period (No at S14 and Yes at S13), the mobile station 200 transmits UL data using designated resources (S15). At UL data transmission (T4) in Fig. 19, the mobile station 200 (mobile station 200a in Fig. 19) transmits UL data to the base station 100 using regions for data transmission (shaded portions) allocated by the base station 100. Conversely, when the mobile station 200 is not able to receive UL RA even if a certain time has passed (Yes at S14), the flow returns to step S11.

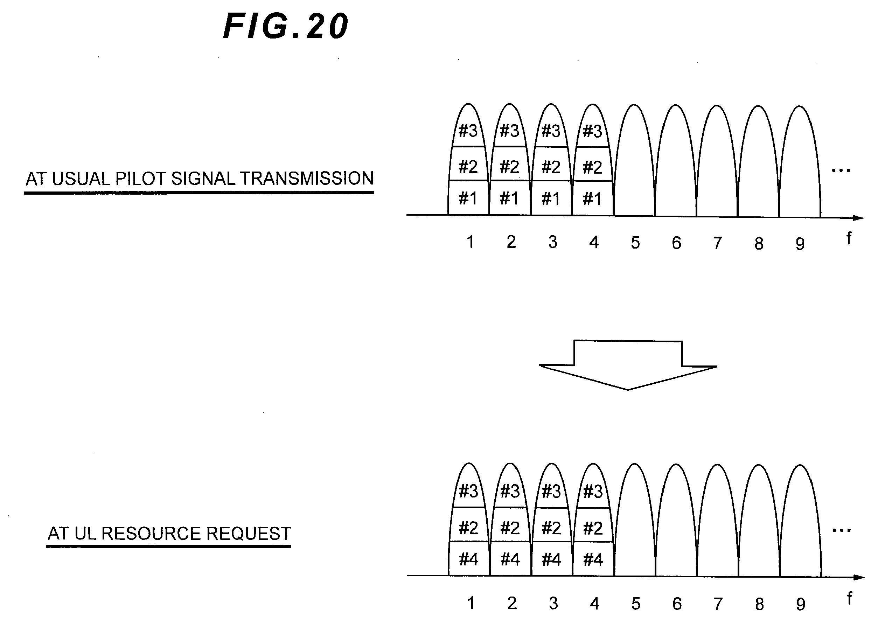

Additional description will be made to the above using Fig. 20. Fig. 20 shows an example of a state in the frequency direction of resources for transmitting a pilot signal of this embodiment. A state in the frequency direction at a certain time of resources for transmitting the pilot signal in a stage other than UL RR stage is shown in the upper part of Fig. 20. Furthermore, a state in the frequency direction at a certain time of resources for transmitting the pilot signal at UL RR is shown in the lower part of Fig. 20. In the upper part of Fig. 20 showing a stage other than UL RR stage, the mobile stations 200a, 200b, and 200c are transmitting the pilot signals using CAZAC codes #1, #2, and #3, respectively, in the frequency regions 1, 2, 3, and 4. In the lower part of Fig. 20 showing UL RR stage, the mobile stations 200b and 200c are transmitting the pilot signal using CAZAC codes #2 and #3, respectively, while the mobile station 200a is transmitting the pilot signal using CAZAC code #4, in the frequency regions 1, 2, 3, and 4

In the base station 100, the pilot signal detecting unit 111 detects that the mobile station 200a which has transmitted the pilot signal using not CAZAC code #1 but CAZAC code #4 is making UL RR, and the scheduling unit 110 performs scheduling and transmits UL RA to the mobile station 200a.

The shorter (1) the transmission interval of the pilot signal or the UL data transmitted to the base station by a mobile station and (2) the reception interval of the pilot signal or the UL data received from a mobile station by the base station are, the more desirable. In this case, the intervals may be, for example, the order of one-subframe length (0.5 msec) or the order of two-subframe length (1 msec). In addition, it is desirable that the intervals are within a period when synchronization can be maintained (e.g. 500 msec or less) at most.

Up to this point, a method of intentionally changing an orthogonal code used to transmit the pilot signal has been described as UL RR method in this embodiment. However, the UL RR method is not limited to the above method provided that both the base station and the mobile stations have in advance common information about (1) whether changing the method of transmitting the pilot signal represents UL RR and (2) what is used as a change pattern of the pilot signal.

Furthermore, in this embodiment, it is described as an example that the base station 100 allocates the CAZAC codes of different sequences to mobile stations 200 to distinguish the mobile stations 200 from each other. However, any other method may be used provided that the base station 100 is able to distinguish the mobile stations 200 from each other.

Thus, according to this embodiment, a mobile station is able to notify the base station of resource request by changing the procedure of transmitting a pilot signal (changing a code used by a mobile station which will make UL RR in this embodiment) without using resources dedicatedly allocated to make resource request. For this reason, no dedicated resource is needed for resource request and therefore resources can be used effectively.

In this embodiment, a mobile station in a DTX/DRX mode is described as an example. However, any mobile station where synchronization is maintained (in other words, a mobile station in an active mode) is able to use UL RR method described in this embodiment.

### (Ninth Embodiment)

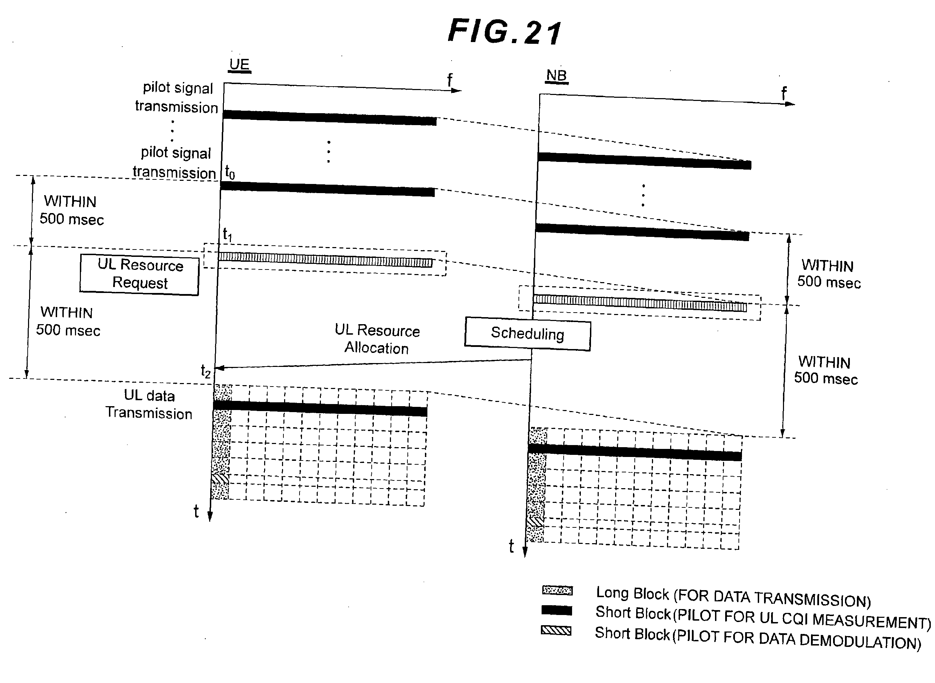

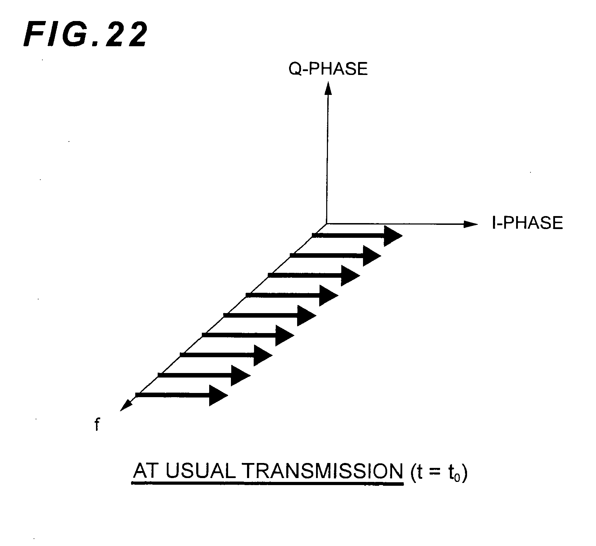

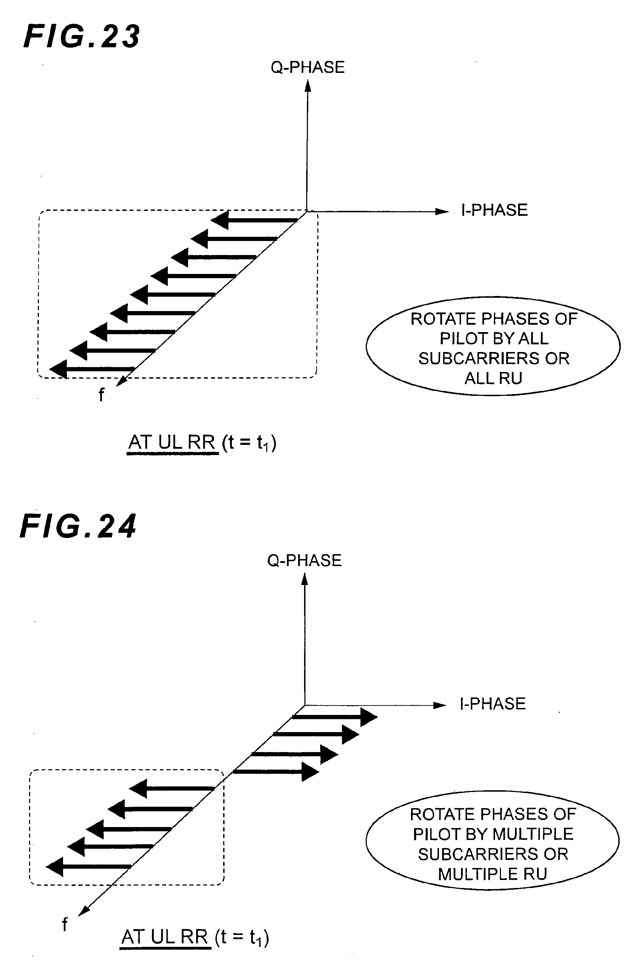

The ninth embodiment will be described in detail with a mobile station in a DTX/DRX mode as an example using Figs. 21 to 26. In this embodiment, there is described an aspect where the transmission of a pilot signal is stopped to make resource request (UL RR). Fig. 21 is a sequence diagram showing an example of a change of a pilot signal according to a UL resource request in the ninth embodiment. Fig. 21 shows a sequence diagram of a mobile station (UE) on the left side, and shows a sequence diagram of a base station (NB) on the right side. Fig. 22 shows an example of phases of a pilot signal transmitted in a stage other than UL RR stage (phases of a pilot signal transmitted at "pilot signal transmission" in Fig. 21). Fig. 22 shows that phases in all bands (all subcarriers or all resource units) secured for the pilot signal are all I phase components (0 degrees). Fig. 23 shows an example of phases of a pilot signal transmitted at UL RR (phases of a pilot signal transmitted at t = t₁ in Fig. 21) . Fig. 23 shows that phases are reversed (that is, phases are turned 180 degrees) over all bands secured for the pilot signal. The operation of UL RR will be described below using Figs. 6 and 21 to 23.

It is assumed that a series of processing procedures performed when a mobile station in a DTX/DRX mode makes UL RR to a base station follow the flow chart shown in Fig. 6 (left). Furthermore, it is assumed that the processing procedure performed by the base station at that time follows the flow chart shown in Fig. 6 (right).

As shown in Fig. 21, it is assumed that the mobile station in a DTX/DRX mode does not always communicate with the base station, and discontinuously transmits at least a pilot signal for UL CQI measurement in a period when synchronization can be maintained (e.g. every 500 msec at most), at certain time-frequency positions, in order to maintain synchronization. On the other hand, the base station discontinuously receives the pilot signal in a period when synchronization can be maintained (e.g. every 500 msec at most). Here, it is assumed that both the base station and the mobile station know in advance the time-frequency positions of the pilot signal. Furthermore, it is assumed that periodical transmission of a pilot signal and UL RR are performed independently with each other.

A pilot signal for maintaining synchronization is included in uplink control data. The control data insertion unit 208 performs channel mapping of uplink transmission data and uplink control data for which channel coding has been performed, and the pilot signal is modulated by the modulation unit 209 and is then up-converted to an RF frequency and transmitted to the base station 100 through the transmitting antenna 201 by the wireless unit 202.

In a mobile station 200, the control unit 210 determines whether it is necessary to make UL RR (resource request) (S11). When the mobile station 200 makes UL RR (Yes at S11), the control unit 210 indicates the pilot signal control unit 211 that UL RR is made, and the pilot signal control unit 211 intentionally changes the phases of the pilot signal (S12). Fig. 21 shows that UL RR was made at the timing of "UL Resource Request" (t = t₁). A rectangle surrounded by a dotted line represents the timing with which a transmitted pilot signal was changed. For example, as shown in Fig. 21, it is assumed that the phase components of a pilot signal transmitted for maintaining usual synchronization at t = to were only I phase components as shown in Fig. 22. Next, when UL RR is made (t = t₁), the phases of all subcarriers or all resource units of the pilot signal are rotated 180 degrees as shown in Fig. 23. This operation corresponds to UL RR.

Here, it is assumed that both the base station 100 and the mobile station 200 know in advance that rotating 180 degrees the phases of the pilot signal which has been transmitted for maintaining the synchronization represents UL RR by implication.

The base station 100 receives the pilot signal by the antenna 101, and the pilot signal is down-converted from an RF frequency to a baseband by the wireless unit 102 and is input to the pilot signal detecting unit 111 in the uplink channel estimation unit 104. It is assumed that the pilot signal detecting unit 111 of the base station 100 always monitors a phase change of a pilot signal. Now, it is assumed that the pilot signal detecting unit 111 of the base station 100 knows in advance that rotating the phases of the pilot signal 180 degrees represents UL RR by implication. When detecting that the phases of the pilot signal which has been periodically transmitted by the mobile station until now in a period when synchronization can be maintained have been rotated (Yes at S21), the pilot signal detecting unit 111 determines that UL RR was made. When detecting that UL RR was made, the pilot signal detecting unit 111 outputs a trigger to the scheduling unit 110 to cause it to perform scheduling. Furthermore, the uplink channel estimation unit 104 calculates uplink propagation channel quality information CQI from the received pilot signal and inputs it to the scheduling unit 110. Uplink AMC information which is an output of the scheduling unit 110 is input to the control data insertion unit 108 and coupled to downlink control data and channel mapping is performed. On the other hand, when the pilot signal detecting unit 111 does not detect UL RR (No at step S21), the flow returns to step S21.

Next, the scheduling unit 110 of the base station 100 performs scheduling increasing resources allocated to an appropriate mobile station using a pilot signal for UL CQI measurement (S22) and then transmits UL RA to the mobile station (S23). In Fig. 21, the scheduling unit 110 of the base station 100 performs scheduling at "Scheduling" and transmits UL RA at "UL Resource Allocation". At that time, the UL RA includes a UL scheduling grant and information designating the positions of time-frequency resources used for UL data transmission. After that, the UL RA is OFDM-modulated by the OFDM modulation unit 109, and is up-converted to an RF frequency and then transmitted to the mobile station 200 through the antenna 101 by the wireless unit 102.

On the other hand, the mobile station 200 receives the UL RA by the antenna 201. The UL RA is down-converted from an RF frequency to a baseband by the wireless unit 202 and is then input to the control data extraction unit 205 through the downlink channel estimation unit 204 and the OFDM demodulation unit 203. The control data extraction unit 205 extracts UL RA information from the UL RA. The mobile station 200 transmits UL data in a designated AMC mode and at designated time-frequency positions based on the UL RA information. In other words, the mobile station 200 waits for a certain period (S14) and receives the UL RA (S13). When receiving the UL RA in the period (No at S14 and Yes at S13), the mobile station 200 is able to transmit UL data using designated resources (S15). At "UL data transmission" in Fig. 21, the mobile station 200 transmits UL data to the base station 100 using regions for data transmission (shaded portions) allocated by the base station 100. Conversely, when the mobile station 200 is not able to receive UL RA even if a certain time has passed (Yes at S14), the flow returns to step S11.

The shorter (1) the transmission interval of the pilot signal or the UL data transmitted to the base station by the mobile station and (2) the reception interval of the pilot signal or the UL data received from the mobile station by the base station are, the more desirable. In this case, the intervals may be, for example, the order of one-subframe length (0.5 msec) or the order of two-subframe length (1 msec). In addition, it is desirable that the intervals are within a period when synchronization can be maintained (e.g. 500 msec or less) at most.

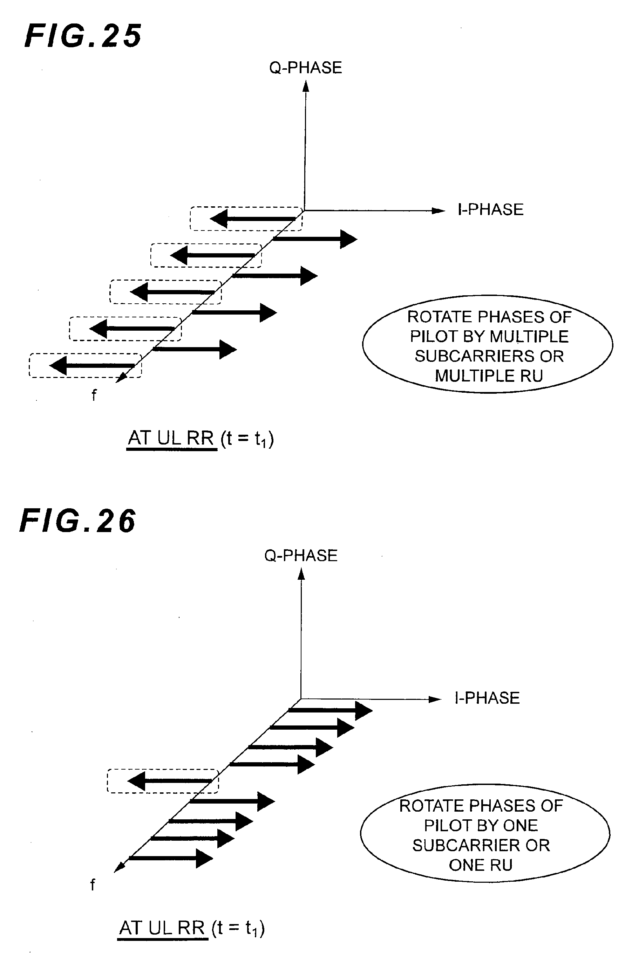

Up to this point, a method of intentionally rotating 180 degrees the phases of the pilot signal transmitted has been described as UL RR method in this embodiment. Other methods of changing the phases of the pilot signal transmitted from the mobile station 200 to the base station 100 which may be used as UL RR method are described in Figs. 24 to 26. In other words, as shown in Fig. 24, the phases of multiple consecutive subcarriers or multiple consecutive resource units of all bands of a pilot signal may be rotated 180 degrees. Furthermore, as shown in Fig. 25, the phases of the subcarriers or the resource units of all bands of a pilot signal may be rotated 180 degrees every two or some subcarriers or resource units. Furthermore, as shown in Fig. 26, the phase of only one subcarrier or only one resource unit of all bands of a pilot signal may be rotated 180 degrees.

The amount of phase rotation is not limited to the above numeric value and may be 90 degrees or 270 degrees, for example.

In addition, a method of expressing the UL RR is not limited to the above methods provided that both the base station and the mobile station have in advance common information about (1) whether changing the method of transmitting the pilot signal represents UL RR by implication and (2) what is used as a change pattern of the pilot signal. Thus, according to this embodiment, the mobile station is able to notify the base station of resource request by changing the procedure of transmitting a pilot signal (changing the phases of a pilot signal in this embodiment) without using resources dedicatedly allocated to make resource request. For this reason, no dedicated resource is needed for resource request and therefore resources can be used effectively.

In this embodiment, a mobile station in a DTX/DRX mode is described as an example. However, any mobile station where synchronization is maintained (in other words, a mobile station in an active mode) is able to use UL RR method described in this embodiment.

Furthermore, in the above description, the difference between a time when the last pilot signal was transmitted before making UL RR and a time when UL data is transmitted in the case that no pilot signal was transmitted for UL RR is desired to be a period of time when synchronization can be maintained. Furthermore, the difference between a time when the last pilot signal was transmitted before making UL RR and a time when a pilot signal is transmitted for UL RR in the case that a pilot signal is transmitted for UL RR is desired to be a period of time when synchronization can be maintained. For example, in Fig. 21, in the case that a pilot signal is transmitted for UL RR, the difference between a time (t = t₀) when the last pilot signal was transmitted before making UL RR and a time (t = t₁) when a pilot signal is transmitted for UL RR is desired to be a period of time when synchronization can be maintained. Furthermore, in the case that no pilot signal is transmitted for UL RR, the difference between a time (t = t₀) when the last pilot signal was transmitted before making UL RR and a time (t = t₂) when UL data is transmitted is desired to be a period of time when synchronization can be maintained.

## Claims

1. A communication terminal apparatus applied to a wireless communication system in which a communication control apparatus allocates resources used when said communication terminal apparatus performs wireless transmission to said communication control apparatus, said communication terminal apparatus comprising:
a determination unit determining whether to make resource request to said communication control apparatus; and
a signal control unit which transmits a signal used to maintain time-frequency synchronization with said communication control apparatus to said communication control apparatus according to a first transmission procedure for maintaining said synchronization, while transmitting said signal to said communication control apparatus according to a second transmission procedure indicating resource request when said determination unit has determined to make resource request.

2. The communication terminal apparatus of claim 1, wherein said second transmission procedure is different from said first transmission procedure in transmission timing of said signal.

3. The communication terminal apparatus of claim 1, wherein said second transmission procedure is different from said first transmission procedure in part of frequency components of said signal.

4. The communication terminal apparatus of claim 1, wherein said second transmission procedure is different from said first transmission procedure in an orthogonal code used when said signal is multiplexed using an orthogonal code.

5. The communication terminal apparatus of any of claims 1, 3, and 4, wherein said second transmission procedure is different from said first transmission procedure in phases of said signal.

6. The communication terminal apparatus of any of claims 1 to 5, wherein said signal is a pilot signal.

7. A communication control apparatus comprising:
a detecting unit detecting that said signal has been transmitted according to said second transmission procedure when receiving said signal from the communication terminal apparatus of any of claims 1 to 6; and
a scheduling unit performing scheduling for allocating new resources to said communication terminal apparatus when said detecting unit detects that said signal has been transmitted according to said second transmission procedure.

8. A wireless communication system comprising:
the communication terminal of any of claims 1 to 6; and
the wireless communication control apparatus of claim 7.

9. A resource allocation request method applied to a wireless communication system in which a communication control apparatus allocates resources used when a communication terminal apparatus performs wireless transmission to said communication control apparatus, wherein:
said communication terminal apparatus
transmits a signal used to maintain time-frequency synchronization between said communication terminal apparatus and said communication control apparatus to said communication control apparatus according to a first transmission procedure for maintaining said synchronization, and on the other hand
transmits said signal to said communication control apparatus according to a second transmission procedure indicating resource request when requesting said resources; and
said communication control apparatus
detects that said signal has been transmitted according to said second transmission procedure when receiving said signal from said communication terminal apparatus,
performs scheduling for allocating new resources to said communication terminal apparatus, and
notifies said communication terminal apparatus of the result of said scheduling.
